# EUROPÄISCHE PATENTSCHRIFT

(11) **EP 4 253 745 B1**
(45) Veröffentlichungstag und Bekanntmachung des Hinweises auf die Patenterteilung: **06.05.2026**
(21) Anmeldenummer: 23163334.8
(22) Anmeldetag: 22.03.2023
(51) Int. Cl.: F02D 41/02, F02D 41/40, F02D 41/24, F02D 41/06

(54) **VERFAHREN ZUM BETREIBEN EINER MEHRFACH DIREKTEINSPRITZENDEN BRENNKRAFTMASCHINE UND MASSENBASIERTER UMSCHALTUNG DER ANZAHL VON EINSPRITZUNGEN**
METHOD FOR OPERATING A MULTI-DIRECT INJECTION INTERNAL COMBUSTION ENGINE AND MASS-BASED SWITCHING OF THE NUMBER OF INJECTIONS
PROCÉDÉ DE FONCTIONNEMENT D'UN MOTEUR À COMBUSTION INTERNE À INJECTION DIRECTE MULTIPLE ET COMMUTATION DU NOMBRE D'INJECTIONS BASÉE SUR LA MASSE

(30) Priorität: 23.03.2022 DE 102022106869
(43) Veröffentlichungstag der Anmeldung: 04.10.2023
(73) Patentinhaber: VOLKSWAGEN AG, 38440 Wolfsburg (DE)
(72) Erfinder: HAASE, Stefan, 38446 Wolfsburg (DE); FRÜHLING, Lasse, 22337 Hamburg (DE); BEYER, Mario, 10115 Berlin (DE); MATSCHENZ, Rene, 38114 Braunschweig (DE)
(74) Vertreter: Gulde & Partner

(56) Entgegenhaltungen:
- DE-A1- 102012 000 688
- DE-B4- 112014 003 993
- DE-T2- 602004 003 390
- US-A1- 2003 233 997

## Beschreibung

Die Erfindung betrifft ein Verfahren zum Betreiben einer Brennkraftmaschine, insbesondere eines Kraftfahrzeugs, bei dem Kraftstoff in einer Einrichtung zur Kraftstoffeinspritzung in einer Mehrzahl von zeitlich voneinander beabstandeten Teileinspritzungen pro Arbeitszyklus direkt in einen Brennraum der Brennkraftmaschine eingespritzt wird.

Das Rohemissionsniveau, insbesondere von HC-, NMHC-Emissionen und die Rußpartikelanzahl, bei niedrigen Motortemperaturen ist sehr hoch. Dem kann mit einer besseren Gemischbildung im Brennraum entgegengewirkt werden, indem die Anzahl der möglichen Einspritzungen erhöht wird. Dies ist insbesondere für den Kaltstart und Warmlauf erforderlich, bis der Brennraum und die Abgasnachbehandlung betriebswarm sind.

Als allgemeiner Stand der Technik sind beispielsweise fünf zeitlich voneinander beabstandete kurze Einspritzimpulse pro Arbeitszyklus, die direkt in einen Brennraum der Brennkraftmaschine eingespritzt werden, bekannt. In Bezug auf die Abgasnachbehandlung werden Zusatztechnologien eingesetzt, wie E-Katalysatoren im Abgassystem, Brenner im Abgassystem oder Sekundärluftsysteme im Abgassystem für ein schnelles Aufheizen des Kats. Zur Verringerung des Rohemissionsniveaus kommen Partikel-Speichersysteme, wie beispielsweise HC-Absorber und Partikelfilter zum Einsatz.

Die Druckschrift DE 101 05 755 A1 beschreibt ein Verfahren zum Betreiben einer Brennkraftmaschine, insbesondere eines Kraftfahrzeugs, bei dem der Kraftstoff mit mindestens einer Einspritzung pro Arbeitszyklus direkt in einen Brennraum der Brennkraftmaschine eingespritzt wird, welches dadurch gekennzeichnet ist, dass eine Kraftstoffeinspritzung eine Mehrzahl von zeitlich voneinander beabstandeten kurzen Einspritzimpulsen umfasst.

Die Druckschrift DE 10 2018 209 096 A1 beschreibt einen Kat-Heizbetrieb für einen Katalysator. Hierbei ist ein Luftverhältnis von λ ≥ 1 gewählt. Nach dem Ladungswechsel-Oberen-Totpunkt erfolgt die erste Einspritzung einer ersten Kraftstoffmenge bei vollständig geöffnetem Schließelement und anschließend eine zweite Einspritzung bei nur teilweise geöffnetem Schließelement. Die zweite Einspritzung erfolgt nach Überschreiten des Zünd-Oberen-Totpunkts mit einer zweiten Kraftstoffmenge. Anschließend erfolgt eine Zündung zum Zündzeitpunkt. Hierbei kann im Kat-Heizbetrieb auch der Vorteil einer zündungsnahen Einspritzung genutzt werden. Hierdurch können insbesondere beim Kaltstart Partikelrohemissionen als auch Stickoxidrohemissionen reduziert werden. Dabei sind auch Mehrfach-Einspritzungen möglich. So kann/können in einem Magerverbrennungsbetrieb vor und nach dem Zündzeitpunkt eine oder mehrere Zusatzeinspritzungen vorgenommen werden. Ebenso kann/können in dem Kat-Heizbetrieb vor und nach dem Zündzeitpunkt eine oder mehrere Kraftstoffeinspritzungen vorgenommen werden.

Die Druckschrift DE 10 2004 046 628 A1 offenbart, dass eine Kraftstoffmenge dann, wenn ein Kraftstoffdruck im Druckspeicher unterhalb eines Schwellenwertes liegt, statt in einer einzigen Einspritzung, unter Aufteilung der Kraftstoffmenge eine Vielzahl von Einspritzimpulsen vorgesehen ist.

Weiteren Stand der Technik bilden die Druckschriften DE 10 2012 000 688 A1, DE 11 2014 003 993 B4, D3 US 2003/233997 A1 und DE 60 2004 003 390 T2.

Ausgangspunkt der Erfindung ist die Benzin-Direkteinspritzung. Bei diesem Verfahren wird der Kraftstoff mit sehr hohem Druck über direkt am Brennraum angeordnete Einspritzventile in den Brennraum der Brennkraftmaschine eingespritzt. Die Brennkraftmaschine arbeitet dabei in bekannter Weise zyklisch. Bei einer Viertakt-Brennkraftmaschine umfasst ein Arbeitszyklus beispielsweise vier Arbeitstakte. Wie oben erläutert, führt eine unvollständige Verbrennung des eingespritzten Kraftstoffs zu HC-, NMHC-Emissionen. Dabei ist es bekannt, dass dieses Problem verstärkt im kalten Zustand der Brennkraftmaschine auftritt, in dem die Abgasanlage noch kalt ist und besonders belastet wird.

Die Aufgabe der vorliegenden Erfindung ist es, dass herkömmliche Verfahren zur ottomotorischen Direkteinspritzung weiterzubilden, sodass der Kraftstoffeinsatz noch weiter optimiert, das heißt verringert wird und gleichzeitig die Emissionen reduziert werden, um insbesondere die Abgasanlage zu entlasten. Die Aufgabe besteht ferner darin, eine Entlastung des Benzineintrags in das Öl der Brennkraftmaschine möglichst signifikant zu reduzieren.

Die Erfindung lehrt ein Verfahren zum Betreiben einer Brennkraftmaschine eines Kraftfahrzeugs, bei dem Kraftstoff in einer Einrichtung zur Kraftstoffeinspritzung in einer

Mehrzahl von zeitlich voneinander beabstandeten Teileinspritzungen pro Arbeitszyklus direkt in einen Brennraum der Brennkraftmaschine eingespritzt wird, mit den Schritten:
- Bestimmen der Gesamteinspritzmasse pro Arbeitszyklus in den Brennraum in Abhängigkeit einer Leistungsanforderung an die Brennkraftmaschine in Abhängigkeit einer in den Brennraum zugeführten Luftmasse und Herstellen eines Kraftstoff/Luft-Gemischs unter Berücksichtigung eines vorgegebenen Luft-Kraftstoff-Verhältnisses;
- Ermitteln einer maximal möglichen Anzahl von Teileinspritzungen je Arbeitszyklus in Abhängigkeit eines kritischen Massenschwellenwertes eines dem jeweiligen Brennraum zugeordneten Kraftstoff-Einspritzventils, bei dem die Kraftstoffmasse je Teileinspritzung nicht unterschritten wird, und der gewünschten einzuspritzenden bestimmten Gesamteinspritzmasse pro Arbeitszyklus;
- Festlegen einer massenbasierten Solleinspritzanzahl in Abhängigkeit der ermittelten maximal möglichen Anzahl von Teileinspritzungen und Aufteilung der Gesamteinspritzmasse auf die festgelegte massenbasierte Solleinspritzanzahl; und
- Einspritzen der Gesamteinspritzmasse pro Arbeitszyklus gemäß der festgelegten massenbasierten Solleinspritzanzahl mit der auf die Teileinspritzungen aufgeteilten Kraftstoffmassen.

Es ist weiter vorgesehen, dass durch das Ermitteln eine Umschaltung einer zuvor ermittelten massenbasierten Solleinspritzanzahl auf eine geringere maximal mögliche ermittelte massenbasierte Solleinspritzanzahl aufgrund einer möglichen Unterschreitung des kritischen Massenschwellenwertes, der raildruckabhängig bei einer minimalen möglichen Öffnungszeit des Kraftstoff-Einspritzventils definiert ist, vorgenommen wird.

Es erfolgt anschließend das Festlegen einer Aufteilung der Gesamteinspritzmasse auf die ermittelte maximal mögliche geringere Anzahl von Teileinspritzungen.

Es ist noch weiter vorgesehen, dass durch das Ermitteln stets eine Umschaltung einer zuvor ermittelten massenbasierten Solleinspritzanzahl auf eine maximal mögliche ermittelte massenbasierte Solleinspritzanzahl unter Berücksichtigung der möglichen Unterschreitung des kritischen Massenschwellenwertes, der raildruckabhängig bei einer minimalen möglichen Öffnungszeit des Kraftstoff-Einspritzventils erreicht wird, vorgenommen wird.

Analog erfolgt anschließend das Festlegen einer Aufteilung der Gesamteinspritzmasse auf die ermittelte maximal mögliche Anzahl von Teileinspritzungen.

Bevorzugt ist vorgesehen, dass in einem Arbeitszyklus innerhalb der Ansaug- und Kompressionsphase massenbasiert mehrere Teileinspritzungen abgesetzt werden, wobei zu verschiedenen Einspritz-Zeitpunkten mehrere Teileinspritzungen, insbesondere bis zu zehn Teileinspritzungen, insbesondere in zwei Einspritzpakten auf die Ansaug- und Kompressionsphase verteilt werden.

Außerdem ist bevorzugt vorgesehen, dass die Umschaltung auf eine ermittelte geringere Anzahl von Teileinspritzungen rechtzeitig vorgenommen wird, sodass der kritische Massenschwellenwert mindestens einer der Teileinspritzungen nicht unterschritten wird, bei dem die Aufteilung der Gesamteinspritzmasse innerhalb der ermittelten möglichen Anzahl von Teileinspritzungen sicher möglich ist.

Vorgesehen ist bevorzugt ferner, dass die Umschaltung auf eine ermittelte maximal mögliche Anzahl von Teileinspritzungen vorgenommen wird, wenn ein Massenschwellenwert erreicht wird, bei dem die Aufteilung der Gesamteinspritzmasse innerhalb der ermittelten maximal möglichen Anzahl von Teileinspritzungen sicher möglich ist.

Das Verfahren zeichnet sich bevorzugt ferner dadurch aus, dass zwischen dem kritischen Massenschwellenwert und dem Massenschwellenwert in einer Hysterese hin- und hergeschaltet wird.

Das Verfahren ist in bestimmten Betriebszuständen von besonderem Vorteil. Bevorzugt wird das Verfahren neben der eigentlichen massenbasierten Fahrweise im Normalbetrieb derart angewendet, dass die Umschaltung der zuvor ermittelten massenbasierten Solleinspritzanzahl ausgehend von einem stöchiometrischen Betrieb der Brennkraftmaschine in einem a) Kaltstart (Startadaption) und/oder einer b) Kat-Diagnose (Parallelisierung) und/oder einem c) Kat-Ausräumen und/oder einem d) Bauteileschutzevent vorgenommen wird, wobei vom stöchiometrischen Betrieb abgewichen wird, sodass eine Änderung der durchgesetzten Gesamtkraftstoffmasse pro Arbeitszyklus und bei Bedarf der ermittelten massenbasierten Solleinspritzanzahl bewirkt wird.

Eine weitere bevorzugte Verwendung erfolgt derart, dass die Umschaltung der zuvor ermittelten massenbasierten Solleinspritzanzahl vorgenommen wird, wenn sich das Luft-Kraftstoff-Gemisch stabil auf einen stöchiometrischen Wert eingependelt hat, und die Brennkraftmaschine in der Momenten-Reserve, wie etwa dem Leerlauf, dem Kat-Heizen, der Partikelfilterregeneration sowie dem Kühlmittelheizen, betrieben wird, wobei in Abhängigkeit von einer Wirkungsgradverschlechterung der Brennkraftmaschine eine Umschaltung auf mindestens eine zusätzliche Teileinspritzung erfolgt, sodass eine Erhöhung der ermittelten massenbasierten Solleinspritzanzahl vorgenommen wird.

Vorgeschlagen wird - zusammengefasst - ein spezifisches Verfahren zur Direkteinspritzung dessen "massenbasiertes Einspritztiming" nachfolgend detailliert erläutert wird.

Die Erfindung wird nachfolgend anhand der zugehörigen Figuren erläutert. Es zeigen:

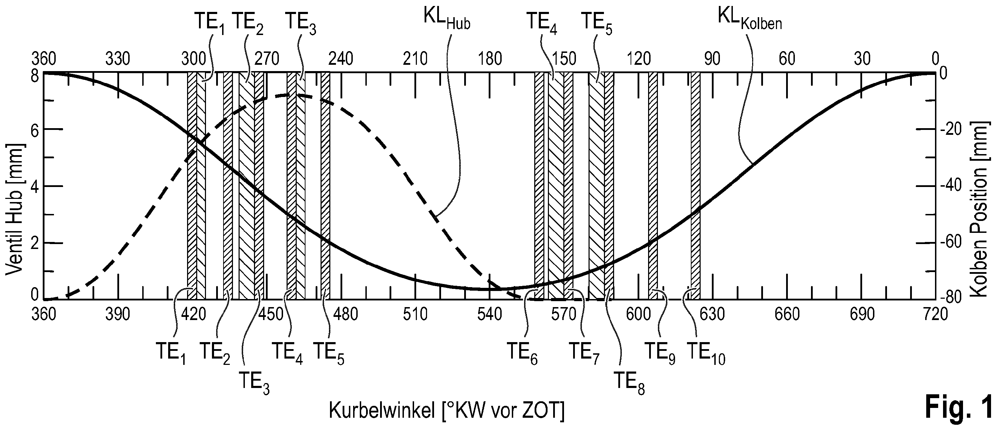

- Figur 1: ein Diagramm mit zwei Abszissen, wobei auf der ersten Abszisse Einspritz-Zeitpunkt (in °KW vor ZOT) und auf der zweiten Abszisse der Kurbelwinkel (in °KW) einer Brennkraftmaschine aufgetragen sind, wobei den Abszissen eine erste Ordinate, auf die der Ventilhub eines einem Zylinder der Brennkraftmaschine zugeordneten Lufteinlassventils (in mm) und eine zweite Ordinate, auf welche die Kolbenposition des in demselben Zylinder (in mm) angeordneten Kolbens aufgetrangen ist, zugeordnet sind;

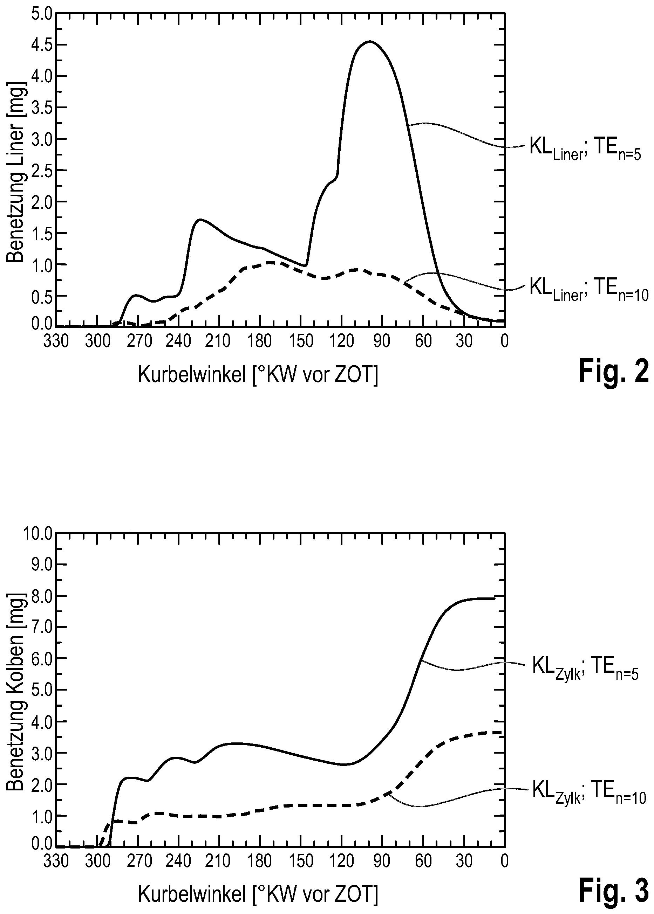

- Figur 2: ein Diagramm auf dessen Abszisse der Kurbelwinkel (in °KW) aufgetragen ist, wobei auf der Ordinate die Benetzung einer Zylinderinnenwand (in mg) aufgetragen ist;
- Figur 3: ein Diagramm auf dessen Abszisse der Kurbelwinkel (in °KW) aufgetragen ist, wobei auf der Ordinate die Benetzung einer Kolbenoberfläche (in mg) aufgetragen ist;

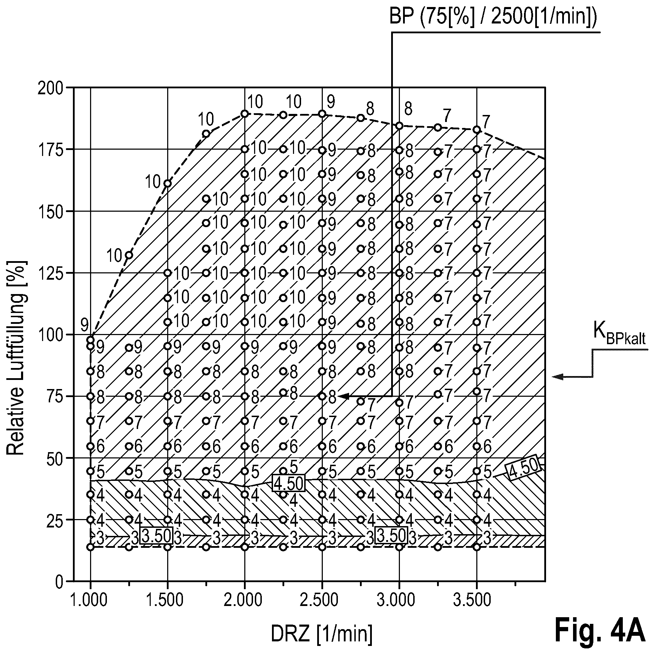

- Figur 4A: ein Diagramm mit einem Kennfeld (K_{BPkalt}) auf dessen Abszisse die Drehzahl DRZ (in 1/min) eine Kurbelwelle aufgetragen ist, während auf der Ordinate die Füllung eines Brennraumes (in %) aufgetragen ist, wobei das Kennfeld (K_{BPkalt}) eine betriebspunktabhängige Fahrweise der Brennkraftmaschine im kalten Betrieb verdeutlicht;

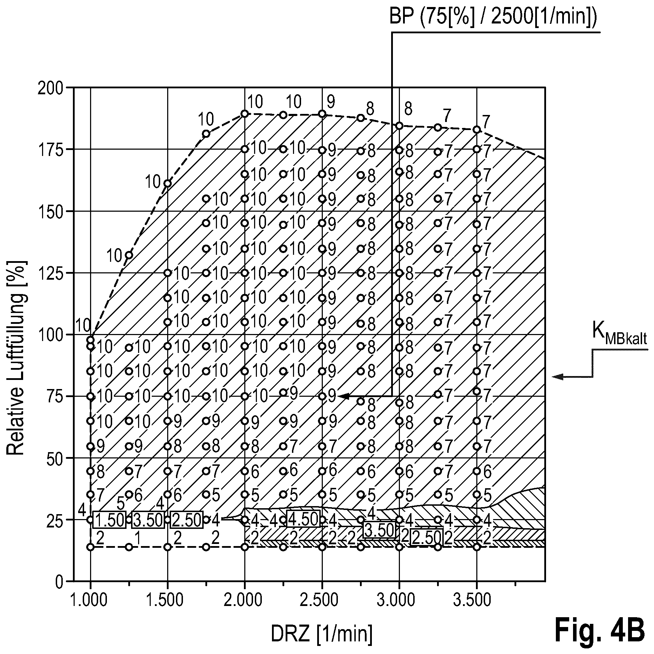

- Figur 4B: ein Diagramm mit einem Kennfeld (K_{MBkalt}) auf dessen Abszisse die Drehzahl DRZ (1/min) eine Kurbelwelle aufgetragen ist, während auf der Ordinate die Füllung eines Brennraumes (in %) aufgetragen ist, wobei das Kennfeld (K_{MSkalt}) eine Fahrweise der Brennkraftmaschine im kalten Betrieb verdeutlicht;

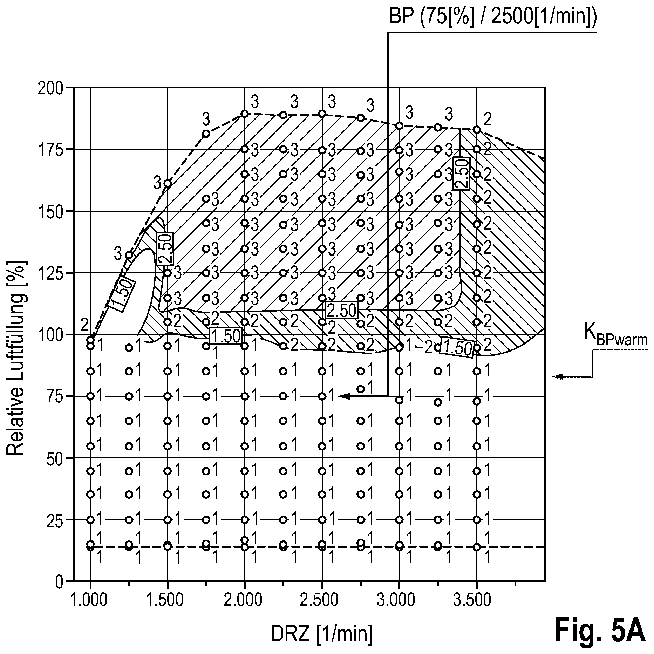

- Figur 5A: ein Diagramm mit einem Kennfeld (K_{BPwarm}) auf dessen Abszisse die Drehzahl DRZ in (1/min) einer Kurbelwelle aufgetragen ist, während auf der Ordinate die Füllung eines Brennraumes (in %) aufgetragen ist, wobei das Kennfeld (K_{BPwarm}) eine betriebspunktabhängige Fahrweise der Brennkraftmaschine im warmen Betrieb verdeutlicht;

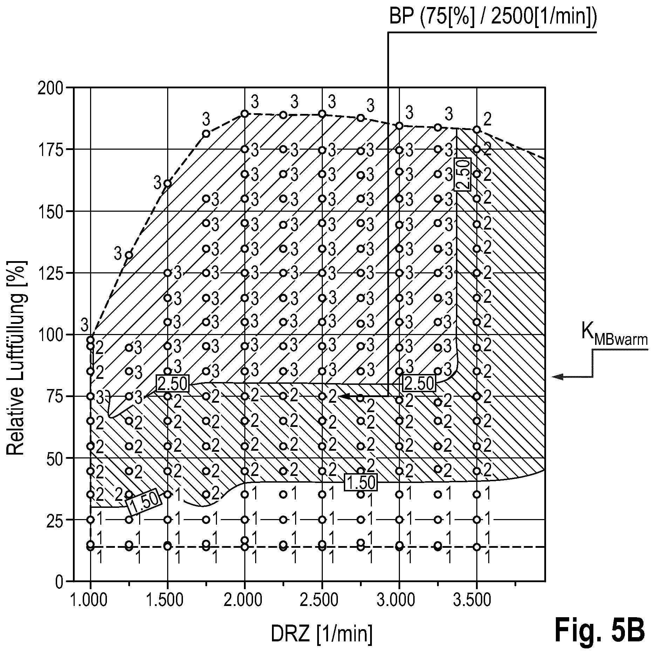

- Figur 5B: ein Diagramm mit einem Kennfeld (K_{MBwarm}) auf dessen Abszisse die Drehzahl DRZ in (1/min) einer Kurbelwelle aufgetragen ist, während auf der Ordinate die Füllung eines Brennraumes (in %) aufgetragen ist, wobei das Kennfeld (K_{MBwarm}) eine massenbasierte Fahrweise der Brennkraftmaschine im warmen Betrieb verdeutlicht;

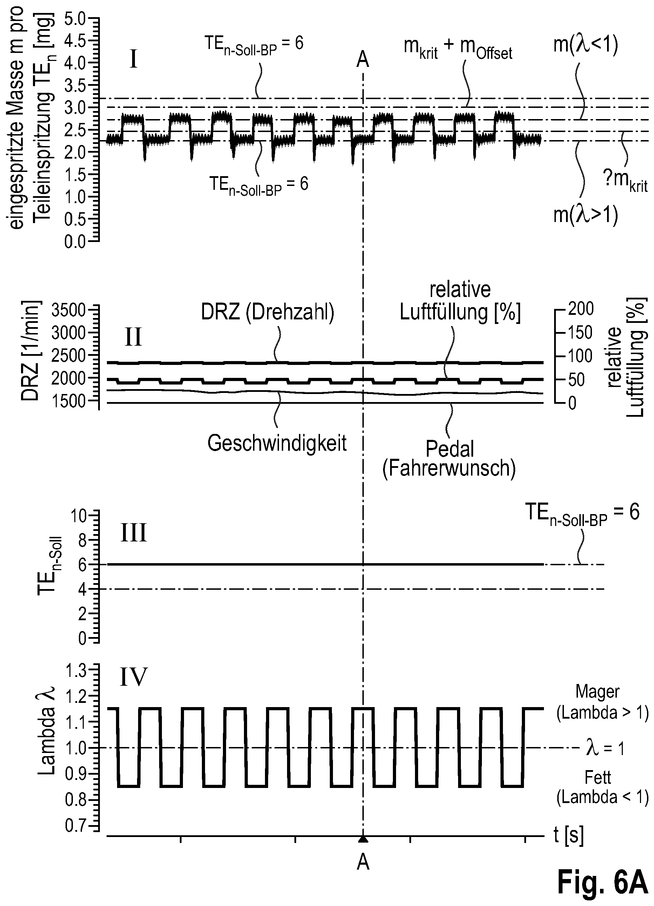

- Figur 6A: Diagramme I, II, III, IV mit Betriebsparametern (Ordinate) über der Zeit t (Abszisse) auf einer Abbildung einer betriebspunktabhängigen Adressierung einer Solleinspritzanzahl TE_{n-Soll-BP}, wobei
- im Diagramm I, die eingespritzte Teil-Kraftstoffmasse m pro Teileinspritzungen TEₙ₌₆ und
- im Diagramm II, die Drehzahl, die relative Füllung des Brennraumes, die Geschwindigkeit des Fahrzeuges mit der Brennkraftmaschine und die Last des Fahrzeuges (Fahrerwunsch, Pedal) und
- im Diagramm III, die Anzahl n der Teileinspritzungen TEₙ₌₆ gemäß der betriebspunktabhängigen Solleinspritzanzahl TE_{n-Soll-BP} und
- im Diagramm IV, der Lambda-Wert λ dargestellt sind;

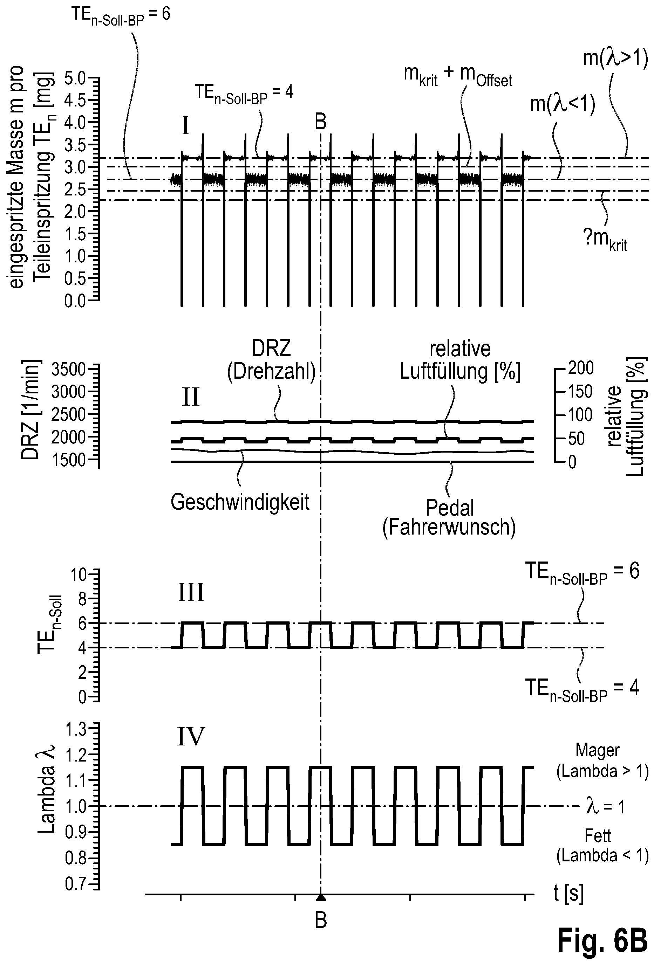

- Figur 6B: die Diagramme I, II, III, IV mit Betriebsparametern (Ordinate) über der Zeit t (Abszisse) auf einer Abbildung bei einer betriebspunktabhängigen Adressierung einer massenbasierten Solleinspritzanzahl TE_{n-Soll-BP} gemäß Figur 6A mit Überprüfung der maximal zulässigen Anzahl n von Teileinspritzungen TEₙ₋ₘₐₓ mit Umschaltung der massenbasierten Solleinspritzanzahl TE_{n-Soll-MB}=6 auf die massenbasierte Solleinspritzanzahl TE_{n-Soll-MB}=4 aufgrund möglicher Unterschreitung eines kritischen Massenschwellenwertes mₖᵣᵢₜ, der minimalen möglichen Öffnungszeit tₘᵢₙ des Kraftstoff-Einspritzventils, wobei
- im Diagramm I, die eingespritzte Kraftstoffmasse m pro Teileinspritzung TEₙ₌₄ nach der Umschaltung der massenbasierten Solleinspritzanzahl TE_{n-Soll-MB}=6 auf die massenbasierten Solleinspritzanzahl TE_{n-Soll-MB}=4 und
- im Diagramm II, die Drehzahl, die relative Füllung des Brennraumes, die Geschwindigkeit des Fahrzeuges mit der Brennkraftmaschine und die Last des Fahrzeuges (Fahrerwunsch, Pedal) und
- im Diagramm III, die Anzahl n der Teileinspritzungen TEₙ₌₆ und TEₙ₌₄ gemäß der massenbasierten Solleinspritzanzahlen und
- im Diagramm IV, der Lambda-Wert λ dargestellt sind;

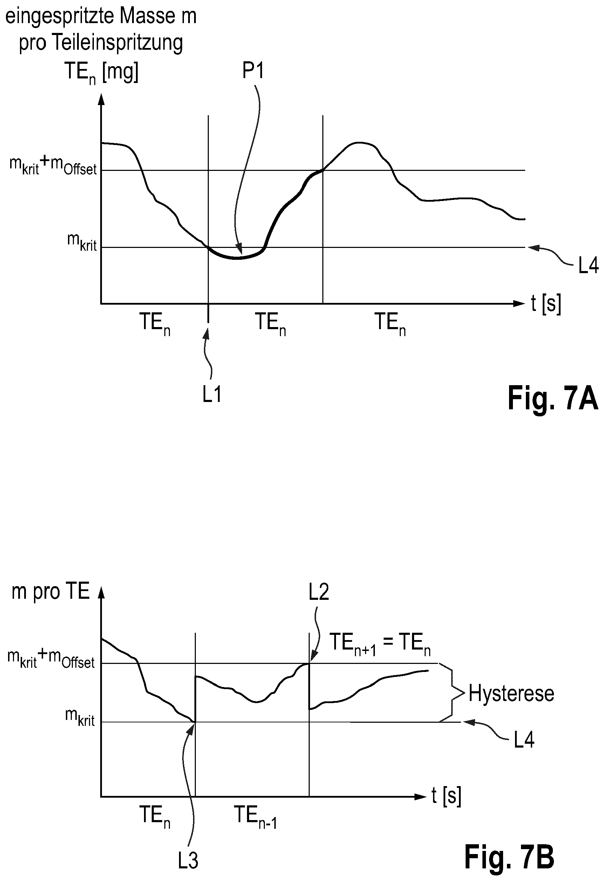

- Figur 7A: ein Diagramm einer bestimmten einzuspritzenden Kraftstoffmasse einer Teileinspritzung TEₙ innerhalb der betriebspunktabhängigen Fahrweise festgelegten Anzahl n von Teileinspritzungen TEₙ (Ordinate) über der Zeit t (Abszisse) mit einem in der betriebspunktabhängigen Fahrweise durch eine fehlende Umschaltung unterschrittenen kritischen Massenschwellenwert mₖᵣᵢₜ mit Unterschreitung von mₖᵣᵢₜ und Erreichen eines kritischen Bereich P1 der mindestens einen Teileinspritzungen TEₙ;
- Figur 7B: ein Diagramm der bestimmten einzuspritzenden Kraftstoffmasse gemäß einer innerhalb der massenbasierten Fahrweise kontinuierlich berechneten Anzahl n von Teileinspritzungen TEₙ (Ordinate) über der Zeit t (Abszisse) mit dem in der massenbasierten Fahrweise kritischen Massenschwellenwert mₖᵣᵢₜ des Kraftstoff-Einspritzventils, in dem die bestimmte Masse je Teileinspritzung TEₙ in vorteilhafter Weise durch die Umschaltung TEₙ₋₁ der Anzahl n der Teileinspritzungen TEₙ ohne Unterschreitung von mₖᵣᵢₜ automatisch heraufgesetzt, und die Anzahl n herabgesetzt wird, und dem Massenschwellenwert mₖᵣᵢₜ+m_{Offset}, bei dem die bestimmte Masse je Teileinspritzung TEₙ automatisch wieder auf die vorherige kontinuierlich berechnete Masse der Teileinspritzungen TEₙ herabgesetzt, und die Anzahl n durch die Umschaltung TEₙ₊₁ der Teileinspritzungen TEₙ wieder heraufgesetzt wird.

Figur 1 zeigt ein Diagramm mit zwei Abszissen, wobei auf der ersten Abszisse die Einspritz-Zeitpunkte (in °KW vor ZOT) und auf der zweiten Abszisse der Kurbelwinkel KW (in °KW) einer Brennkraftmaschine aufgetragen sind. Auf einer ersten Ordinate ist der Ventilhub eines einem Zylinder der Brennkraftmaschine zugeordneten Hochdruck-Kraftstoff-Einspritzventils (in mm) aufgetragen. Auf der zweiten Ordinate ist die Kolbenposition des im selben Zylinder (in mm) angeordneten Kolbens aufgetragen ist.

Eine nicht näher dargestellte Brennkraftmaschine wird in bekannter Weise nach dem Viertaktprinzip betrieben, ein Arbeitszyklus umfasst demnach vier Takte. Sie umfasst einen Brennraum, dem Luft über ein Ansaugrohr in Abhängigkeit eines sich öffnenden und schließenden Ansaugventils entsprechend der Hub-Kennlinie KL_{Hub} zugeführt wird.

Kraftstoff wird in den Brennraum durch das nicht näher dargestellte Kraftstoff-Einspritzventil eingespritzt. Das Kraftstoff-Einspritzventil wird aus einer nicht dargestellten Kraftstoff-Sammelleitung gespeist, welche auch als "Rail" bezeichnet wird und in der der Kraftstoff unter sehr hohem Druck, beispielsweise 350 bar bereitgestellt wird. Die Zündung des im Brennraum gebildeten Kraftstoff-Luftgemischs erfolgt durch eine nicht näher dargestellte Zündeinrichtung, insbesondere einer Zündkerze. Durch die Expansion des verbrennenden Luft-Kraftstoffgemischs wird in bekannter Weise ein Kolben bewegt, dessen Kolben-Kennlinie KL_{Kolben} in Figur 1 dargestellt ist.

Der Betriebszustand der Brennkraftmaschine, insbesondere die Position des Kolbens wird durch einen nicht näher dargestellten Sensor erfasst. Die heißen Verbrennungsabgase werden in bekannter Weise über ein Abgasrohr abgeleitet und einem ebenfalls nicht dargestellten Katalysator innerhalb einer nicht dargestellten Abgasanlage zugeleitet.

Die Brennkraftmaschine umfasst ein Steuer- und Regelgerät, dem die Leistungsanforderung eines Benutzers durch ein Gaspedal mitgeteilt wird. Ferner erhält das Steuer- und Regelgerät noch Signale von einem Sensor, der den relevanten Winkel °KW der Kurbelwelle KW der Brennkraftmaschine erfasst und ein entsprechendes Signal an das Steuer- und Regelgerät weiterleitet. Ausgangsseitig ist das Steuer- und Regelgerät zudem unter anderem mit dem Einspritzventil eines Einspritzsystems und der Zündanlage zur Zündung des Luft-Kraftstoff-Gemischs verbunden.

Um eine Homogenisierung, das heißt, eine möglichst gleichmäßige Vermischung des vom Einspritzventil in den Brennraum eingespritzten Kraftstoffs mit der durch das Ansaugrohr angesaugten Luft zu erreichen, wird der Kraftstoff im Allgemeinen sehr früh, das heißt, schon zu Anfang der Abwärtsbewegung des Kolbens in der Ansaugphase der Brennkraftmaschine, eingespritzt.

Bei der in Figur 1 dargestellten herkömmlichen Fahrweise werden in einem bestimmten beispielhaften Betriebspunkt BP drei Teileinspritzungen TEₙ₌₃; TE₁, TE₂, TE₃ entsprechend einer vorgenommenen Kennfeldbedatung, bei vorgegebenen Kurbelwinkeln °KW, bei 300°KW, 275°KW und bei 260°KW in einem frühen Einspritzpaket in der Ansaugphase eingespritzt.

Eine vierte und fünfte Teileinspritzung TEₙ₌₂; TE₄, TE₅, findet in dem bestimmten beispielhaften Betriebspunkt BP bei der herkömmlichen Fahrweise in einem späten Einspritzpaket im Kompressionstakt bei vorgegebenen Kurbelwinkeln °KW bei 155°KW und bei 140°KW statt.

Bei einer Fahrweise mit maximal fünf, der in Figur 1 dargestellten Teileinspritzungen TEₙ₌₅ ergibt sich beispielsweise eine Benetzung der Zylinderinnenwand, dem sogenannten Liner, die in der Kennlinie KL_{Liner} in Figur 2 in Abhängigkeit der Position der Kurbelwelle in °KW analog zu Figur 1 dargestellt ist.

Bei einer Fahrweise mit den fünf in Figur 1 dargestellten Teileinspritzungen TEₙ₌₅ ergibt sich beispielsweise eine Benetzung (der brennraumseitigen Fläche) des Zylinderkolbens, die in der Kennlinie KL_{Zylk} in Figur 3 in Abhängigkeit der Position der Kurbelwelle in °KW analog zu Figur 1 dargestellt ist.

Wie Figur 1 weiter verdeutlicht, ist vorgesehen, dass während eines Arbeitszyklus innerhalb der Ansaug- und Kompressionsphase mehr Teileinspritzungen TEₙ als bisher abgesetzt werden, wobei vorgesehen ist, dass zu verschiedenen Einspritz-Zeitpunkten, die in einem Kennfeld bedatet sind, mehrere Teileinspritzungen TEₙ, im Ausführungsbeispiel bis zu zehn Teileinspritzungen TEₙ₌₁₀ auf die Ansaug- und Kompressionsphase verteilt werden.

Dabei ist vorgesehen, dass gemäß Figur 1 in dem bestimmten beispielhaften Betriebspunkt BP zunächst fünf Teileinspritzungen TEₙ₌₅; TE₁, TE₂, TE₃, TE₄, TE₅ vorgesehen sind, wobei die Einspritz-Zeitpunkte in einem Kennfeld bedatet sind. Es ist vorgesehen, dass fünf Teileinspritzungen TE₁₋₅; TE₁, TE₂, TE₃, TE₄, TE₅ bei vorgegebenen Kurbelwinkeln °KW zwischen 300°KW und 260°KW in der Ansaugphase in einem frühen Einspritzpaket betriebspunktabhängig abgesetzt werden, wobei eine gleichlange - sich nicht verändernde - Pausenzeit ΔP zwischen den einzelnen Teileinspritzungen TEₙ₌₅ von beispielsweise ΔP=1,5ms vorgesehen ist.

Es ist weiter vorgesehen, dass gemäß Figur 1 in dem bestimmten beispielhaften Betriebspunkt BP fünf weitere Teileinspritzungen TE₆₋₁₀; TE₆, TE7, TE₈, TE₉, TE₁₀ vorgesehen sind, wobei die Einspritz-Zeitpunkte in einem Kennfeld bedatet sind. Beispielhaft ist vorgesehen, dass fünf Teileinspritzungen TE₁₋₆; TE₁, TE₂, TE₃, TE₄, TE₅ bei vorgegebenen Kurbelwinkeln KW in °KW zwischen 155°KW und 140°KW in der Kompressionsphase in einem späten Einspritzpaket betriebspunktabhängig abgesetzt werden, wobei wiederum eine gleichlange - sich nicht verändernde - Pausenzeit von ΔP zwischen den einzelnen Teileinspritzungen TE₆₋₁₀ von beispielsweise ΔP=1,5ms vorgesehen ist.

Bei einer Fahrweise mit zehn in Figur 1 dargestellten Teileinspritzungen TEₙ₌₁₀ ergibt sich beispielsweise eine Benetzung der Zylinderinnenwand, die in der Kennlinie KL_{Liner} in Figur 2 in Abhängigkeit der Position der Kurbelwelle in °KW analog zu Figur 1 dargestellt ist.

Bei einer Fahrweise mit zehn in Figur 1 dargestellten Teileinspritzungen TEₙ₌₁₀ ergibt sich beispielsweise eine Benetzung des Zylinderkolbens, die in der Kennlinie KL_{Zylk} in Figur 3 in Abhängigkeit der Position der Kurbelwelle in °KW analog zu Figur 1 dargestellt ist.

Da insbesondere während der Ansaugphase im Brennraum ein relativ geringer Druck herrscht, besteht die Gefahr, dass der vom Kraftstoff-Einspritzventil unter hohem Druck in den Brennraum eingespritzte Kraftstoff auf die dem Kraftstoff-Einspritzventil gegenüberliegende Wand des Brennraums oder die Oberseite des Kolbens prallt und dort anhaftet. Ein solcher Kraftstoffauftrag auf die Wand oder den Kolben ist schwer verdampfbar und nimmt nicht oder zumindest nicht in der gewünschten Weise an der Verbrennung im Brennraum teil, was den Kraftstoffverbrauch erhöht und das Emissionsverhalten verschlechtert.

Das Problem des Niederschlags des Kraftstoffs an einer Wand des Brennraums ist - wie erwähnt - besonders markant, wenn die Wand des Brennraums kalt ist. In diesem Fall wird in bekannter Weise das Kaltstartverhalten der Brennkraftmaschine beeinträchtigt.

Um zu vermeiden, dass es insbesondere im kalten Betrieb zu einem solchen Niederschlag des Kraftstoffs an einer Wand des Brennraums kommt, ist vorgesehen, dass das Kraftstoff-Einspritzventil von dem Steuer- und Regelgerät so angesteuert wird, dass es möglichst oft impulsartig öffnet und schließt, das heißt, dass möglichst viele Teileinspritzungen TEₙ₋ₘₐₓ vorgesehen werden, um die Eindringtiefe des Kraftstoffs im Brennraum derart gering zu halten, dass der Kraftstoff nicht mehr auf die dem Einspritzventil gegenüberliegende Wand des Brennraums prallt.

Durch diese diskontinuierliche Kraftstoffeinspritzung des Kraftstoffs mittels einer optimierten Anzahl n der Mehrzahl n einzelner Einspritzimpulse beziehungsweise Teileinspritzungen TEₙ in den Brennraum, wird die Eindringtiefe des Kraftstoffs in den Brennraum reduziert. Die Gefahr, dass der Kraftstoff sich an der dem Kraftstoff-Einspritzventil gegenüberliegenden Wand des Brennraums oder auf der den Brennraum bildenden Kolbenfläche des Zylinderkolbens niederschlägt, wird wirkungsvoll verringert. Hierdurch wird sichergestellt, dass der in den Brennraum eingespritzte Kraftstoff möglichst vollständig als Luft-Kraftstoffgemisch im Brennraum vorliegt und somit eine optimale Verbrennung des eingespritzten Kraftstoffs erfolgt. Dies senkt den Kraftstoffverbrauch und verbessert das Emissionsverhalten, insbesondere die HC-, NMHC- und Rußemissionen. Besonders günstig wirkt sich die verringerte Eindringtiefe des Kraftstoffs in den Brennraum dann aus, wenn die Wand des Brennraums kalt ist, also beim Kaltstart der Brennkraftmaschine.

Es wird deutlich, dass es von großem Vorteil ist, eine möglichst große Anzahl n von Teileinspritzungen TEₙ abzusetzen, wobei bisher, wie nachfolgend erläutert, vorgegangen wurde.

Als betriebspunktabhängige Fahrweise wird verstanden, dass in einem Kennfeld K_{BP} in Abhängigkeit von der Drehzahl DRZ und der relativen Füllung eines Brennraumes, eine gewünschte Anzahl n von Teileinspritzungen TEₙ - als feste betriebspunktabhängige Vorgabe/n innerhalb einer Bedatung des Kennfeldes K_{BP} - angegeben wird. Die einzuspritzende Gesamtmasse Kraftstoff pro Arbeitszyklus ist in bekannter Weise abhängig von der relativen Füllung des Brennraumes, das heißt von der Luftmasse, die in den Brennraum gelangt. Die einzuspritzende Gesamtmasse Kraftstoff pro Arbeitszyklus wird unter Berücksichtigung von Lambda λ=1 in Abhängigkeit der relativen Füllung in % auf eine gewünschte Anzahl n von Teileinspritzungen TEₙ - als feste betriebspunktabhängige Vorgabe/n innerhalb der Bedatung des Kennfeldes K_{BP} - linear oder nicht linear - aufgeteilt.

Die beschriebene betriebspunktabhängige Fahrweise wird anschließend anhand der Figur 4A an einem Beispiel im kalten Betrieb der Brennkraftmaschine noch näher verdeutlicht.

Die Figur 4A zeigt in einem Diagramm ein Kennfeld K_{BPkalt} auf dessen Abszisse die Drehzahl DRZ in 1/min eine Kurbelwelle aufgetragen ist, während auf der Ordinate die Füllung des Brennraumes in % aufgetragen ist, wobei das Kennfeld K_{BPkalt} eine betriebspunktabhängige Fahrweise der Brennkraftmaschine im kalten Betrieb verdeutlicht. Mit anderen Worten, das Kennfeld K_{BPkalt} beziehungsweise der Ausschnitt des Kennfeldes verdeutlicht eine betriebspunktabhängige Fahrweise der beispielhaft gewählten Brennkraftmaschine mit einem Hubraum von 1,0 l und einer Nennleistung von 85 KW (Druck im Rail 350 bar) im kalten Betrieb in dem die Anzahl der Teileinspritzungen TEₙ bedatet ist.

In Figur 4A wird anhand des Diagramms des bedateten Kennfeldes K_{BPkalt} verdeutlicht, in welchen Betriebspunkten BP der genannten Brennkraftmaschine im kalten Betrieb analog zu Figur 1 zehn Teileinspritzungen TE₁₋₁₀ abgesetzt werden können.

Innerhalb des Kennfeldes K_{BPkalt} werden, wie an einem der anderen beispielhaften Betriebspunkte BP mit einer Füllung des Brennraumes von 75 % und einer DRZ von 2500 in 1/min (Druck im Rail 350 bar) verdeutlicht wird, acht Teileinspritzungen TEₙ₌₈ betriebspunktabhängig vorgegeben.

Mit anderen Worten, die Kennfeld-Vorgabe im beispielhaften kalten Betriebspunkt 75(%)/2500(1/min) führt dazu, dass nur acht Teileinspritzungen TEₙ₌₈ vorgenommen werden, die gemäß Figur 1 auf einen Arbeitszyklus in bevorzugter Ausgestaltung in frühe und späte Pakete verteilt werden.

Das heißt, diese Kennfeld-Vorgabe in einem von der Anzahl der Teileinspritzungen TEₙ₌₁₀ abweichenden beispielhaften anderen Betriebspunkt BP des Kennfeldes K_{BPkalt} weist in dem Betriebspunkt Füllung=75 % und Drehzahl DRZ=2500 in 1/min nur acht Teileinspritzungen TEₙ₌₈ auf. Das liegt daran, dass bei diesem Betriebspunkt BP die beispielsweise maximal gewünschte Anzahl von zehn Teileinspritzungen TEₙ₋ₘₐₓ=10, aufgrund der zur Einspritzung vorgesehenen betriebspunktabhängigen Gesamteinspritzmasse m_{Ges} mittels zehn Teileinspritzungen TEₙ₌₁₀, unter Berücksichtigung einer minimalen möglichen Öffnungszeit tₘᵢₙ=des Kraftstoff-Einspritzventils, die nicht unterschritten werden kann, und einer vorgegebenen gleichbleibenden Pausenzeit ΔP nicht realisiert werden kann, wie noch weiter erläutert wird.

Bei einem Kraftstoff-Einspritzventil ergibt sich die minimale mögliche, das heißt zur Verfügung stehende Öffnungszeit tₘᵢₙ des Kraftstoff- Einspritzventils zu tₘᵢₙ=tₒₑ+tₐₛ+tₛ. Diese Zeit tₘᵢₙ kann nicht unterschritten werden.

Hierbei ist tₘᵢₙ die minimale Öffnungszeit des Schaltventils und tₒₑ die Öffnungszeit, tₐₛ die Zeit am Hubanschlag und tₛ die Schließzeit.

Je länger die Zeit tₘᵢₙ ist, umso mehr Masse (Kraftstoffmasse) wird dem Schaltraum des Kraftstoff-Einspritzventils entnommen und umso größer ist die Kraftstoffeinspritzmasse des Kraftstoff-Einspritzventils (Injektors), die durch die Verstellung einer von dem Schaltventil durch den Fluiddruck in dem Schaltraum gesteuerten Injektornadel in den Brennraum gespritzt wird.

Das heißt auch, dass der minimal möglichen Öffnungszeit tₘᵢₙ des Kraftstoff-Einspritzventils unter Berücksichtigung des Raildrucks ein kritischer Massenschwellenwert mₖᵣᵢₜ zugeordnet ist, der im Sinne einer bestimmten kritischen Masse mₖᵣᵢₜ pro Teileinspritzung TEₙ nicht unterschritten werden kann. Mit anderen Worten, eine noch kleinere Einspritzmasse als mₖᵣᵢₜ pro Teileinspritzung TEₙ kann nicht durch das Kraftstoff-Einspritzventil durchgesetzt werden.

Jedes Kraftstoff-Einspritzventil weist dabei eine bekannte Injektorspezifikation auf, das heißt, ohne Berücksichtigung betriebsrelevanter Einflüsse (wie Alterung usw.) ist tₘᵢₙ, die minimale Öffnungszeit tₘᵢₙ des Kraftstoff-Einspritzventils und der zugehörige injektorspezifische kritische Massenschwellenwert mₖᵣᵢₜ bekannt.

Erfindungsgemäß wird, wie folgt vorgegangen:
Mit dem Ziel, eine größtmögliche Anzahl TEₙ₋ₘₐₓ von Teileinspritzungen TEₙ, in jeder Betriebsart (kalter oder warmer Betrieb) der Brennkraftmaschine, aber insbesondere im kalten Betrieb zu realisieren, ist es erfindungsgemäß vorgesehen, in Abhängigkeit der minimalen Öffnungszeit tₘᵢₙ des Kraftstoff-Einspritzventils, die maximal mögliche Anzahl an Teileinspritzungen TEₙ₋ₘₐₓ unter Berücksichtigung der einzuspritzenden Gesamtkraftstoffmasse m_{Ges} zu ermitteln und dabei zu berücksichtigen, dass in bestimmten Betriebszuständen der kritische Massenschwellenwert mₖᵣᵢₜ des Kraftstoff-Einspritzventils nicht unterschritten wird.

Mittels der bisherigen Vorgehensweise auf Basis von ausschließlich betriebspunktabhängig bedateten Kennfeldern K_{BPkalt} (vergleiche Figur 4A) oder K_{BPwarm} (vergleiche Figur 5A) ist diese möglichst hohe Anzahl n-max an Teileinspritzungen TEₙ₋ₘₐₓ nicht optimal gelöst, da die Bedatung der Kennfelder hinsichtlich der Anzahl der Teileinspritzungen TEₙ ausschließlich auf der Basis der relativen Füllung und der Drehzahl DRZ im jeweiligen Betriebspunkt BP und der damit einhergehenden bestimmten Gesamteinspritzmasse m_{Ges} entschieden und durch Bedatung des jeweiligen Kennfeldes K_{BP} fest vorgegeben ist.

Mit anderen Worten, Lambdasollsprünge, bei denen ausgehend vom stöchiometrischen Betrieb λ=1 durch Betriebszustände a) Kaltstart (Startadaption), b) Kat-Diagnose (Parallelisierung) oder c) Kat-Ausräumen oder d) Bauteileschutzevents abgewichen und eine Änderung der durchgesetzten Gesamtkraftstoffmasse m_{Ges} pro Arbeitszyklus bewirkt wird, werden bei der betriebspunktabhängigen Vorgehensweise in Bezug auf die maximal mögliche Anzahl n von Teileinspritzungen TEₙ₋ₘₐₓ in nachteiliger Weise nicht berücksichtigt.

Eine weitere Problematik tritt bei der betriebspunktabhängigen Vorgehensweise auf, die durch die Erfindung gelöst werden soll. Die Problematik besteht darin, dass bei einer Veränderung der einzuspritzenden Gesamtkraftstoffmasse m_{Ges} pro Arbeitszyklus und bei gleichbleibender Anzahl n von Teileinspritzungen TEₙ und unveränderter Pausenzeiten ΔP zwischen den Teileinspritzungen TEₙ aufgrund von Lambdasprüngen die Gefahr besteht, dass innerhalb des betriebspunktabhängigen bedateten Kennfeldes ein kritischer Zustand entsteht, der dadurch hervorgerufen wird, dass das Kraftstoff-Einspritzventil durch seine minimale mögliche Öffnungszeit tₘᵢₙ bei einer bestimmten im betriebspunktabhängigen bedateten Kennfeld Anzahl n von Teileinspritzungen TEₙ je Teileinspritzung eine zu niedrige Kraftstoffmasse einspritzt, wenn die Gesamtkraftstoffmasse m_{Ges} pro Arbeitszyklus beispielsweise in Magerbetriebszuständen oder in anderen Betriebszuständen um einen bestimmten Betrag erniedrigt wird.

Mit anderen Worten, werden beispielsweise bei einer betriebspunktabhängigen Adressierung der Solleinspritzanzahl TE_{n-Soll-BP} im betriebspunktabhängig bedateten Kennfeld beispielsweise sechs Teileinspritzungen TEₙ₌₆ (vergleiche vorab Figur 6A) vorgesehen, so kann es sein, dass es dann, wenn keine Änderung der Einspritzanzahl n=6 aufgrund einer erniedrigten durchzusetzenden Gesamtkraftstoffmasse m_{Ges} des Kraftstoffs erfolgt, zu einer Unterschreitung des kritischen Massenschwellenwertes mₖᵣᵢₜ des Kraftstoff-Einspritzventils kommt. Das liegt daran, dass die herabgesetzte durchzusetzende Gesamtkraftstoffmasse m_{Ges} unter Berücksichtigung der minimalen möglichen Öffnungszeit tₘᵢₙ des Kraftstoff-Einspritzventils bereits nach beispielsweise fünf Teileinspritzungen TEₙ₌₅ vollständig abgesetzt ist. Das heißt, es kommt dazu, dass mindestens eine der sechs Teileinspritzungen TEₙ₌₆ nicht oder nicht abgesetzt werden kann, wodurch die im Zusammenhang mit Figur 1 erläuterte Kraftstoffverteilung in nachteiliger Weise nicht wie gewünscht erfolgt.

Wie bereits erwähnt, umfasst die Brennkraftmaschine ein Steuer- und Regelgerät, dem die Leistungsanforderung eines Benutzers durch ein Kraftstoffpedal mitgeteilt wird, sodass eine betriebspunktabhängige Kraftstoffmasse an das Steuer- und Regelgerät übermittelt wird.

Kommt es jetzt in Abhängigkeit des jeweiligen Betriebspunktes BP in den erläuterten Betriebszuständen zu einer erhöhten oder erniedrigten Kraftstoffmasse, verändert sich die zu beachtende Gesamteinspritzmasse m_{Ges}. Eine ausschließlich betriebspunktabhängige Bedatung der Gesamteinspritzmasse m_{BP} berücksichtigt die durch die genannten Betriebszustände veränderte Gesamteinspritzmasse m_{Ges} nicht.

Aus diesem Grund sieht die Erfindung vor, dass im Steuer- und Regelgerät, dem die Leistungsanforderung übermittelt wird, keine betriebspunktabhängigen Gesamteinspritzmassen m_{BP} übermittelt werden, sondern ausschließlich massenbasierte Gesamteinspritzmassen m_{Ges} berechnet und festgelegt werden, wie nachfolgend erläutert ist.

Entsprechend der Leistungsanforderung wird unter der massenbasierten Fahrweise verstanden, dass für jeden Arbeitszyklus eine bestimmte Gesamteinspritzmasse m_{Ges} gewünscht beziehungsweise vorgegeben wird. In Abhängigkeit der dem Brennraum zugeführten Luftmasse wird die bestimmte Gesamteinspritzmasse m_{Ges} unter Berücksichtigung eines vorgegebenen Lambda-Wertes λ der zugeführten Luftmasse beigefügt, wobei vorgesehen ist, dass noch vor der eigentlichen Einspritzung stets "automatisch" und "kontinuierlich" ermittelt wird, welche Anzahl n von Teileinspritzungen TEₙ - in Abhängigkeit vom mₖᵣᵢₜ und der gewünschten einzuspritzenden bestimmten Gesamteinspritzmasse m_{Ges} - je Arbeitszyklus maximal möglich ist. Daraufhin findet die Einspritzung der Gesamteinspritzmasse m_{Ges} stets in der maximal möglichen Anzahl n von Teileinspritzungen TEₙ₋ₘₐₓ statt, wobei die Gesamteinspritzmasse m_{Ges} auf die Teileinspritzungen TEₙ linear oder nicht linear unter Berücksichtigung eines Nichtunterschreitens von mₖᵣᵢₜ auf die einzelnen Teileinspritzungen TEₙ massenbasiert aufgeteilt wird. Ziel ist es, den kritischen Massenschwellenwert mₖᵣᵢₜ unter Berücksichtigung des Raildrucks niemals zu unterschreiten.

Einer bestimmten Leistungsanforderung in einem Betriebspunkt BP wird beispielsweise im kalten Betrieb im massenbasierten Kennfeld K_{MBkalt} gemäß Figur 4B eine einzuspritzende Gesamtmasse m_{Ges} zugeordnet. Durch diese Zuordnung kann beispielsweise eine "Kaltstartadaption" durchgeführt werden, sodass von der betriebspunktabhängigen Fahrweise abweichend, eine innerhalb der Kaltstartadaption erhöhte Gesamteinspritzmassen m_{Ges} eingespritzt wird.

Über das Steuer- und Regelgerät wird diese Vorgabe übermittelt und durch die massenbasierte Vorgehensweise in vorteilhafter Weise berücksichtigt, indem die Gesamteinspritzmasse m_{Ges} erhöht und dann wie zuvor erläutert vorgegangen wird.

Das heißt, entsprechend der durch die Leistungsanforderung und der Kaltstartadaption gebildeten erhöhten Gesamteinspritzmasse m_{Ges} wird bei der massenbasierten Fahrweise für jeden Arbeitszyklus die bestimmte - jetzt die durch die Kaltstartadaption erhöhte Gesamteinspritzmasse m_{Ges} vorgegeben. In Abhängigkeit der dem Brennraum zugeführten Luftmasse wird diese, kaltstartbedingt erhöhte Gesamteinspritzmasse m_{Ges} unter Berücksichtigung eines vorgegebenen Lambda-Wertes λ der zugeführten Luftmasse beigefügt, wobei vorgesehen ist, dass noch vor der eigentlichen Einspritzung stets "automatisch" und "kontinuierlich" ermittelt wird, welche Anzahl n von Teileinspritzungen TEₙ - in Abhängigkeit vom mₖᵣᵢₜ und der gewünschten einzuspritzenden kaltstartbedingt erhöhten Gesamteinspritzmasse m_{Ges} - je Arbeitszyklus maximal möglich ist. Daraufhin findet die Einspritzung der Gesamteinspritzmasse m_{Ges} stets in der maximal möglichen Anzahl n von Teileinspritzungen TEₙ₋ₘₐₓ statt, wobei die Gesamteinspritzmasse m_{Ges} auf die Teileinspritzungen TEₙ linear oder nicht linear ebenfalls unter Berücksichtigung eines Nichtunterschreitens von mₖᵣᵢₜ auf die einzelnen Teileinspritzungen TEₙ massenbasiert aufgeteilt wird.

Dabei steht in jedem Arbeitszyklus ein Wert für die maximal zur Verfügung stehende Gesamtöffnungszeit Δt_{Ges} des Kraftstoff-Einspritzventils zur Einspritzung der Gesamteinspritzmasse m_{Ges} in den n Teileinspritzungen TEₙ zur Verfügung, wenn die Gesamteinspritzmasse m_{Ges} in einer einzigen Einspritzung n=1 abgesetzt werden würde. Diese Gesamtöffnungszeit Δt_{Ges} wird, gemäß der zuvor erläuterten Prämissen, in eine maximal mögliche Anzahl n von Teileinspritzungen TEₙ₋ₘₐₓ mit mehreren Teilöffnungszeiten unter Berücksichtigung eines Nichtunterschreitens von mₖᵣᵢₜ massenbasiert aufgeteilt, sodass im Steuer- und Regelgerät die massenbasierte Solleinspritzanzahl TE_{n-Soll-MB} vorliegt und schließlich als Isteinspritzanzahl TE_{n-Ist-MB} ausgeführt wird.

Es wird derart vorgegangen, dass die jeweilige (aktuelle) Gesamteinspritzmassen m_{Ges} in gleichgroße (linear) oder nicht gleichgroße (nicht linear) Kraftstoffmassen m pro Teileinspritzung TEₙ unter Berücksichtigung gleichbleibender oder veränderbarer vorgebbarer Pausenzeiten ΔP und des kritischen Massenschwellenwertes mₖᵣᵢₜ geteilt wird, wodurch die maximal mögliche Anzahl n von Teileinspritzungen TEₙ₋ₘₐₓ errechnet wird, die dann im Steuer- und Regelgerät als ermittelte massenbasierte Solleinspritzanzahl TE_{n-Soll-MB} vorliegt und schließlich als Isteinspritzanzahl TE_{n-Ist-MB} ausgeführt wird.

Der Vorteil wird durch Figur 4B verdeutlicht. Durch Vergleich der in Figur 4B massenbasiert ermittelten größtmöglichen Anzahl von Teileinspritzungen TEₙ₋ₘₐₓ=9 im Betriebspunkt 75(%)/2500(1/min) mit dem gleichen Betriebspunkt 75(%)/2500(1/min) in Figur 4A wird deutlich, dass die einzuspritzende Gesamteinspritzmasse m_{Ges} in Abhängigkeit der aus der Injektorspezifikation bekannten minimalen Öffnungszeit tₘᵢₙ des Einspritzventils und der vorgebbaren gleichverteilten gleichlangen Pausenzeiten ΔP zwischen den einzelnen Teileinspritzungen TEₙ durch die massenbasierte Berechnung bis zu neun TEₙ₋ₘₐₓ=9, statt bisher (vergleiche Figur 4A) acht Teileinspritzungen TEₙ₌₈ vorgenommenen werden kann, die in der herkömmlichen betriebspunktabhängigen Vorgehensweise im Kennfeld K_{BPkalt} vorgegeben sind.

Durch diese Erhöhung der Anzahl der Teileinspritzungen, hier im Ausführungsbeispiel n+1, werden die bereits erläuterten gewünschten Vorteile hinsichtlich der optimalen Verbrennung des eingespritzten Kraftstoffs und hinsichtlich der Senkung des Kraftstoffverbrauchs und der Verbesserung des Emissionsverhaltens, insbesondere die HC-, NmHC- und Rußemissionen, insbesondere im kalten Betrieb (Kaltstart) der Brennkraftmaschine erreicht.

Diese Vorgehensweise wird auch durch die Figuren 5A und 5B verdeutlicht.

Die Figur 5A zeigt ein Diagramm mit einem Kennfeld K_{BPwarm} auf dessen Abszisse die Drehzahl DRZ in 1/min einer Kurbelwelle KW aufgetragen ist, während auf der Ordinate die relative Füllung eines Brennraumes in % aufgetragen ist, wobei das Kennfeld K_{BPwarm} eine betriebspunktabhängige Fahrweise der Brennkraftmaschine im warmen Betrieb verdeutlicht.

Die Figur 5B zeigt ein Diagramm mit einem Kennfeld K_{MBwarm} auf dessen Abszisse die Drehzahl DRZ in 1/min eine Kurbelwelle KW aufgetragen ist, während auf der Ordinate die Füllung eines Brennraumes in % aufgetragen ist, wobei das Kennfeld K_{MBwarm} eine massenbasierte Fahrweise und Berechnung der größtmöglichen Anzahl von Teileinspritzungen TEₙ₋ₘₐₓ der Brennkraftmaschine im warmen Betrieb verdeutlicht.

Gemäß den Figuren 5A und 5B wird eine Besonderheit verdeutlicht, die darin besteht, dass bei der massenbasierten Fahrweise mit dem Ziel, eine größtmögliche Anzahl TEₙ₋ₘₐₓ von Teileinspritzungen TEₙ zu ermitteln, eine Schwellenwertvorgabe berücksichtigt wird, bei der TE_{n- max} </=3) sein soll. Das heißt, hinsichtlich der maximalen Anzahl TEₙ₋ₘₐₓ der Teileinspritzungen wird im warmen Betrieb, wie zuvor erläutert, die jeweilige (aktuelle) Gesamteinspritzmasse m_{Ges} in gleichgroße eingespritzte Kraftstoffmassen m pro Teileinspritzungen TEₙ unter Berücksichtigung der gleichbleibenden vorgebbaren Pausenzeit ΔP und des kritischen Massenschwellenwertes mₖᵣᵢₜ geteilt, wodurch die maximal mögliche Anzahl n von Teileinspritzungen TEₙ₋ₘₐₓ errechnet wird. Ist der errechnete Wert TEₙ₋ₘₐₓ > 3, wird die Anzahl der Teileinspritzungen TEₙ auf den maximalen Wert n=3 gesetzt.

Das heißt, im Steuer- und Regelgerät werden im warmen Betrieb gemäß dem massenbasierten Kennfeld K_{MBwarm} ausschließlich ermittelte massenbasierte Solleinspritzanzahlen TE_{n-Soll-MB}=1, 2 oder 3 verarbeitet und als Teileinspritzungen TEₙ als Isteinspritzanzahlen TE_{n-Ist-MB} abgesetzt.

Der Vorteil der massenbasierten Vorgehensweise wird durch Figur 5B verdeutlicht. Durch Vergleich der in Figur 5B massenbasiert ermittelten größtmöglichen Anzahl von Teileinspritzungen TEₙ₋ₘₐₓ=2 im Betriebspunkt 75(%)/2500(1/min) mit dem gleichen Betriebspunkt 75(%)/2500(1/min) in Figur 5A wird deutlich, dass die einzuspritzende Gesamteinspritzmassen m_{Ges} in Abhängigkeit der aus der Injektorspezifikation bekannten minimalen Öffnungszeit tₘᵢₙ des Einspritzventils und der vorgebbaren gleichverteilten gleichlangen Pausenzeiten ΔP zwischen den einzelnen Teileinspritzungen TEₙ durch die massenbasierte Berechnung bis zu zwei TEₙ₋ₘₐₓ=2, statt bisher (vergleiche Figur 5A) nur eine Teileinspritzungen TEₙ₌₁ vorgenommenen werden kann, die in der herkömmlichen betriebspunktabhängigen Vorgehensweise im Kennfeld K_{BPkalt} vorgegeben sind.

Durch eine massenbasierte Fahrweise ist es somit in vorteilhafter Weise möglich, dass nicht nur leistungsbezogene Parameter, wie das gewünschte Drehmoment berücksichtigt werden, denn im Betrieb der Brennkraftmaschine kommt es auch zu Betriebszuständen, wie dem KAT-Ausräumen der Abgasanlage, bei dem die Kraftstoffmasse, unabhängig von der Leistungsanforderung des Benutzers durch Betätigung des Fahrpedals erhöht wird. Dadurch erhöht sich die in dem jeweiligen Arbeitszyklus gewünschte einzuspritzende Kraftstoffgesamtmasse, das heißt die Gesamteinspritzmasse m_{Ges}, die durch die massenbasierte Fahrweise, in den Kennfeldern K_{NBkalt} (vergleiche Figur 4B) und K_{MBwarm} (vergleiche Figur 5B) berücksichtigt wird.

Durch eine massenbasierte Fahrweise ist es in vorteilhafter Weise möglich, dass unabhängig von dem kalten oder warmen beispielhaften lastabhängigen Betriebspunkt 75(%)/2500(1/min) über eine lastunabhängige Anpassung der einzuspritzenden Gesamteinspritzmasse m_{Ges} im jeweiligen Kennfeld K_{MBkalt} (vergleiche Figur 4B) oder K_{MBwarm} (vergleiche Figur 5B) fetter - mit mehr Kraftstoff - oder magerer - mit weniger Kraftstoff - gefahren werden kann.

Dabei wird bei dieser Ermittlung stets berücksichtigt, ob die in Abhängigkeit der im Kennfeld K_{MBkalt} oder im Kennfeld KMBwarm festgelegten einzuspritzenden Gesamteinspritzmasse m_{Ges} ermittelte größtmögliche Anzahl TEₙ₋ₘₐₓ von Teileinspritzungen TEₙ auch innerhalb einer maximal zur Einspritzung zur Verfügung stehenden Gesamtzeit Δt_{Ges} realisiert werden kann.

Die Figur 6A zeigt Diagramme I, II, III, IV mit Betriebsparametern (Ordinate) über der Zeit t (Abszisse) auf einer Abbildung einer betriebspunktabhängigen Adressierung einer ermittelten Solleinspritzanzahl TE_{n-Soll-BP}.

Im Diagramm I ist die eingespritzte Masse m pro Teileinspritzung bei sechs Teileinspritzungen TEₙ₌₆ dargestellt.

Im Diagramm II sind die Kennlinien Drehzahl mit zugehöriger Skalierung, die relative Füllung des Brennraumes mit zugehöriger Skalierung und die Geschwindigkeit des Fahrzeuges ohne zugehörige Skalierung (konstant > 0) und der Fahrerwunsch (Pedal = konstant >0) ebenfalls ohne Skalierung dargestellt.

Im Diagramm III ist die Anzahl n der Teileinspritzungen TEₙ₌₆ gemäß der betriebspunktabhängigen Solleinspritzanzahl TE_{n-Soll-BP}=6 dargestellt.

Im Diagramm IV ist der Lambda-Wert λ dargestellt, der die Grundlage für die in den Diagrammen I bis III dargestellten Kennlinien bildet.

Die vertikale Linie A in der Abbildung verdeutlicht, dass in einem Magerbetrieb λ > 1 gemäß Diagramm IV bei unveränderter betriebspunktabhängiger Solleinspritzanzahl TE_{n-Soll-BP}=6 gemäß Diagramm III und konstanter Fahrweise der Brennkraftmaschine gemäß Diagramm II, die eingespritzte Kraftstoffmasse m pro Teileinspritzung TEₙ, bei der vorgegebenen Solleinspritzanzahl TE_{n-Soll-BP}=6 gegebenenfalls in nachteiliger Weise in den kritischen Massenschwellenwert ?mₖᵣᵢₜ des Kraftstoff-Einspritzventils kommt, wie an dem Schnittpunkt der Linie A bei dem geringsten Betrag der Masse m pro Teileinspritzung TEₙ im Diagramm I verdeutlicht ist.

Die in diesem Fall einzuspritzende Gesamtmasse m_{Ges} ist durch den die Erfindung verdeutlichenden Lambdasprung auf λ > 1 so klein, dass die zugehörige Kraftstoffmasse innerhalb von sechs Teileinspritzungen TEₙ₌₆ wegen tₘᵢₙ, der minimalen möglichen Öffnungszeit tₘᵢₙ des Kraftstoff-Einspritzventils nicht mehr sicher abgesetzt werden kann.

Dieses Problem wird durch die erfindungsgemäße Vorgehensweise behoben, wie nachfolgend erläutert wird.

Figur 6B zeigt Diagramme I, II, III, IV mit Betriebsparametern (Ordinate) über der Zeit t (Abszisse) auf einer Abbildung dargestellt, bei einer betriebspunktabhängigen Adressierung einer Solleinspritzanzahl TE_{n-Soll-BP} gemäß Figur 6A mit Überprüfung der maximal zulässigen Anzahl n von Teileinspritzungen TEₙ mit Umschaltung der ermittelten massenbasierten Solleinspritzanzahl TE_{n-Soll-MB}=6 auf die massenbasierte ermittelte Solleinspritzanzahl TE_{n-Soll- MB}=4 aufgrund möglicher Unterschreitung des kritischen Massenschwellenwertes mₖᵣᵢₜ, der durch die minimale mögliche Öffnungszeit tₘᵢₙ des Kraftstoff-Einspritzventils erreicht wird.

Im Diagramm I ist die eingespritzte Kraftstoffmasse m pro Teileinspritzung TEₙ₌₄ nach der Umschaltung der ermittelten massenbasierten Solleinspritzanzahl TE_{n-Soll-MB}=6 auf die ermittelte massenbasierte Solleinspritzanzahl TE_{n-Soll-MB}=4 dargestellt.

Im Diagramm II sind die Kennlinien Drehzahl mit zugehöriger Skalierung, die relative Füllung des Brennraumes mit zugehöriger Skalierung und die Geschwindigkeit des Fahrzeuges ohne zugehörige Skalierung (konstant > 0) und der Fahrerwunsch (Pedal=konstant <0) ebenfalls ohne Skalierung dargestellt.

Im Diagramm III ist die Anzahl n der Teileinspritzungen TEₙ₌₆ und TEₙ₌₄ gemäß der massenbasierten n Solleinspritzanzahlen Solleinspritzanzahl TE_{n-Soll-MB}=6 und ermittelten massenbasierten Solleinspritzanzahl TE_{n-Soll-MB}=4 dargestellt.

Im Diagramm IV ist der Lambda-Wert λ dargestellt, der die Grundlage für die in den Diagrammen I bis III dargestellten Kennlinien bildet.

Die vertikale Linie B in der Abbildung verdeutlicht, dass in einem Magerbetrieb λ > 1 gemäß Diagramm IV gemäß Diagramm III eine Umschaltung der massenbasierten ermittelten massenbasierten Solleinspritzanzahl TE_{n-Soll-MB}=6 auf die ermittelte Solleinspritzanzahl TE_{n-Soll- MB}=4 erfolgt.

In dem Diagramm II wird deutlich, dass die konstante Fahrweise der Brennkraftmaschine dem Diagramm II entspricht, das heißt, die vom Fahrer vorgegebene Last hat sich nicht verändert.

Da die eingespritzte Kraftstoffmasse m pro Teileinspritzung TEₙ, bei der vorgegebenen Solleinspritzanzahl TE_{n-Soll-BP}=6 in nachteiliger Weise in den kritischen Massenschwellenwert ?mₖᵣᵢₜ des Kraftstoff-Einspritzventils gemäß Diagramm I kommt, wird die Anzahl n der Teileinspritzungen TE_{n auf} die massenbasierten Solleinspritzanzahl TE_{n-Soll-MB}=4 abgesenkt. Vergleiche Diagramm III im Schnittpunkt mit Linie B.

Dadurch erhöht sich in gewünschter Weise die eingespritzte Kraftstoffmasse m pro Teileinspritzung TEₙ bei TE_{n-Soll-MB}=4, wie in Diagramm I im Schnittpunkt mit der Linie B verdeutlicht ist, sodass die Gefahr einer möglichen Unterschreitung von mₖᵣᵢₜ, in Abhängigkeit der minimalen möglichen Öffnungszeit tₘᵢₙ des Kraftstoff-Einspritzventils nicht mehr besteht.

Im Ausführungsbeispiel wird aufgrund des zur Verdeutlichung gewählten großen Betrages des Lambdasprungs die ermittelte massenbasierten Solleinspritzanzahl TE_{n-Soll-MB}=6 auf TE_{n-Soll-MB}=4 um die Anzahl n-2 abgesenkt.

Es gilt der Grundsatz, dass im Steuer- und Regelgerät n-1 beziehungsweise n+1 gemäß der obigen Berechnung der möglichen massenbasiert ermittelten massenbasierten Solleinspritzanzahl TE_{n-Soll-MB} Umschaltungen zur massenbasierten Anpassung der ermittelten massenbasierten Solleinspritzanzahl TE_{n-Soll-MB} durchgeführt werden. Im Ausführungsbeispiel wurde somit im Steuer- und Regelgerät kurz nacheinander die Absenkung der ermittelten massenbasierten Solleinspritzanzahl TE_{n-Soll-MB}=6 auf TE_{n-Soll-MB}=4 durch zwei kurz nacheinander erfolgten Umschaltungen n-1 durchgeführt. Diese gestufte Umschaltung ist in Figur 6B nicht erkennbar.

Die Figur 7A zeigt schließlich ein Diagramm mit der eingespritzten Kraftstoffmasse m einer Teileinspritzung TEₙ (Ordinate) über der Zeit t (Abszisse) einer Mehrfach-Einspritzung mit einem in der betriebspunktabhängigen Fahrweise kritischen Massenschwellenwert mₖᵣᵢₜ des Kraftstoff-Einspritzventils.

Zudem ist in Figur 7A zur Verdeutlichung der Erfindung in Bezug auf Figur 7B ein Massenschwellenwert mₖᵣᵢₜ+m_{Offset} dargestellt, bei dem die Einspritzung der vorgegebenen Massen aller Teileinspritzungen TEₙ einer Mehrfach-Einspritzung in der betriebspunktabhängigen und der massenbasierten Fahrweise auf jeden Fall sicher möglich ist.

Bei einer Mehrfacheinspritzung in einem Arbeitszyklus ist es beispielsweise bei sechs Teileinspritzungen TEₙ₌₆ analog zu Figur 6A möglich, dass mindestens eine Teileinspritzung TEₙ bei einer betriebspunktabhängigen Adressierung der Solleinspritzanzahl TE_{n-Soll-BP}=6 gemäß dem Pfeil P1 in einen kritischen Bereich P1 unterhalb mₖᵣᵢₜ kommt, wenn keine Änderung der Solleinspritzanzahl TE_{n-Soll-BP}=6 aufgrund der durchgesetzten Masse des Kraftstoffs bei sechs Teileinspritzungen TEₙ₌₆ erfolgt. Der kritische Massenschwellenwert mₖᵣᵢₜ des Kraftstoff-Einspritzventils wird unterschritten, mit dem Effekt, dass mindestens eine der Teileinspritzungen TEₙ₌₆ nicht abgesetzt oder nicht sicher abgesetzt wird.

Gemäß der Legende L1 in Figur 7A erfolgt in nachteiliger Weise keine Umschaltung von TE_{n-Soll-BP} bei der kritischen Masse mₖᵣᵢₜ.

Anders verhält es sich erfindungsgemäß wie in Figur 7B dargestellt ist.

In diesem Diagramm ist wiederum die eingespritzte Kraftstoffmasse m pro Teileinspritzung TEₙ (Ordinate) über der Zeit t (Abszisse) mit dem in der massenbasierten Fahrweise kritischen Massenschwellenwert mₖᵣᵢₜ des Kraftstoff-Einspritzventils dargestellt.

Zudem ist in Figur 7B analog zu Figur 7A der Massenschwellenwert mₖᵣᵢₜ+m_{Offset} dargestellt, bei dem die massenbasiert vorgegebenen Massen aller Teileinspritzungen TEₙ einer Mehrfach-Einspritzung nach einer Umschaltung zu einer höheren Anzahl n von Teileinspritzungen TEₙ unkritisch bleiben, wie nachfolgend weiter erläutert wird.

Bei einer Mehrfacheinspritzung in einem Arbeitszyklus ist es beispielsweise bei sechs Teileinspritzungen TEₙ₌₆ analog zu Figur 6B nicht mehr möglich, dass mindestens eine Teileinspritzung TEₙ bei einer massenbasierten Adressierung der Solleinspritzanzahl T=6 gemäß dem Pfeil P1 in einen kritischen Bereich P1 unterhalb mₖᵣᵢₜ kommt.

Es erfolgt nämlich in vorteilhafter Weise vor Unterschreiten des kritischen Bereichs P1 die Änderung der massenbasierten Solleinspritzanzahl TE_{n-Soll-MB}=6, das heißt ein Herabsetzen der massenbasierten Solleinspritzanzahl TE_{n-Soll-MB}=6 im Ausführungsbeispiel (vergleiche Figur 6, insbesondere I und III, Linie B) zweimal um n-1 auf TE_{n-Soll-BP}=4. Das heißt, der kritische Massenschwellenwert mₖᵣᵢₜ des Kraftstoff-Einspritzventils wird nicht mehr unterschritten, mit dem Effekt, dass stets alle der Teileinspritzungen als Isteinspritzanzahl TE_{n-Ist-MB}=4 abgesetzt werden. Wird der kritische Massenschwellenwert mₖᵣᵢₜ innerhalb einer Hysterese erreicht, wird die massenbasierte Solleinspritzanzahl TE_{n-Soll-MB} herabgesetzt.

Wird der Massenschwellenwert mₖᵣᵢₜ+m_{Offset} innerhalb der Hysterese zwischen mₖᵣᵢₜ und mₖᵣᵢₜ+m_{Offset} wieder erreicht, wird erfindungsgemäß die massenbasierte Solleinspritzanzahl TE_{n- Soll-MB}=4 im Ausführungsbeispiel (vergleiche Figur 6, insbesondere I und III) zweimal um n+1 auf TE_{n-Soll-MB}=6 wieder erhöht und als Isteinspritzanzahl TE_{n-Ist-MB}=6 abgesetzt.

Die Hysterese sorgt in vorteilhafter Weise dafür, dass zwischen den Schwellwerten mₖᵣᵢₜ+m_{Offset} und mₖᵣᵢₜ hin- und hergeschaltet werden kann, ohne dass es zu einem permanenten Umschalten zwischen der jeweiligen Anzahl n der Teileinspritzungen TEₙ₌₆ führt.

Gemäß der Legende L2 in Figur 7B erfolgt eine Umschaltung bei mₖᵣᵢₜ+m_{Offset} auf TE_{n-Soll-MB}, wenn mindestens eine weitere Einspritzung n+1 möglich ist, ohne dass die kritische Masse mₖᵣᵢₜ unterschritten wird.

Gemäß der Legende L3 in Figur 7B erfolgt eine Umschaltung von mindestens einer Teileinspritzung TEₙ auf n-1 von TE_{n-Soll-MB}, bevor die kritische Masse mₖᵣᵢₜ erreicht ist.

Die Legende L4 in den Figuren 7A und 7B bezeichnet die kritische Masse mₖᵣᵢₜ unterhalb der ein Öffnen des Einspritzventils nicht sicher gewährleistet ist.

Abschließend noch einige Ausführungsbeispiele zu den zuvor genannten bestimmten Betriebszuständen, bei denen insbesondere Lambdasollsprünge stattfinden.

Ausgehend vom stöchiometrischen Betrieb λ=1 wird in diesen Betriebszuständen a) Kaltstart (Startadaption), b) Kat-Diagnose (Parallelisierung) oder c) Kat-Ausräumen oder d) Bauteileschutzevents vom stöchiometrischen Betrieb λ=1 abgewichen, sodass eine Änderung der durchgesetzten Gesamtkraftstoffmasse m_{Ges} pro Arbeitszyklus bewirkt wird.

Diese Betriebszustände werden unter Verwendung des erfindungsgemäßen Verfahrens, der "massenbasierten Fahrweise", wie folgt berücksichtigt.

### a) Kaltstart (Startadaption):

Beispielsweise wird - bereits erläutert - anhand einer erforderlichen Anfettung des Luft-Kraftstoff-Gemischs bei der Startadaption, die zusätzlich nötige Kraftstoffmasse mit einer zusätzlichen Teileinspritzungen TEₙ₊₁ (zusätzliche Teileinspritzung) nach durchgeführter Prüfung der Umschaltung realisiert, um so die Homogenisierung des Luft-Kraftstoff-Gemischs positiv zu beeinflussen, um die Brennkraftmaschine in vorteilhafter Weise noch besser vor einem Kraftstoffeintrag in das Öl zu schützen.

### b) Kat-Diagnose (Parallelisierung):

Verändert sich der lastabhängige Betriebspunkt BP nicht, und es kommt aus anderen Gründen zu einer erhöhten oder erniedrigten Gesamteinspritzmenge m_{Ges}, in einem Betriebszustand, wie der KAT-Diagnose der Abgasanlage, bei dem die Kraftstoffmenge unabhängig von der Leistungsanforderung des Benutzers verändert wird, so wird dieser Betriebszustand "KAT-Diagnose" bisher in Bezug auf die maximal mögliche Anzahl n der Teileinspritzungen TE_{n- max} in nachteiliger Weise nicht berücksichtigt.

Es ist bevorzugt vorgesehen, dass bei der Kat-Diagnose, bei einer Magerverstellung (vergleiche Figur 6B, I bis IV) des Luft-Kraftstoff-Gemischs und gleichzeitigem Halten des Betriebspunktes im quasistationären Zustand in vorteilhafter Weise unter Berücksichtigung der kritischen Masse mₖᵣᵢₜ eine Umschaltung stattfindet, sodass anstatt n Teileinspritzungen TEₙ mindestens eine Teileinspritzungen TEₙ₋₁ weniger abgesetzt wird.

Bei Fettverstellung (vergleiche Figur 6B, I bis V) des Luft-Kraftstoff-Gemischs ist beim gleichen quasistationären Betriebspunkt aber eine erhöhte Gesamteinspritzmenge m_{Ges} erforderlich, die unter Berücksichtigung der kritischen Masse mₖᵣᵢₜ durch Umschaltung stattfindet, sodass anstatt n Teileinspritzungen TEₙ mindestens eine Teileinspritzung TEₙ₊₁ zusätzlich abgesetzt wird.

### c) Kat-Ausräumen:

Auch beim Kat-Ausräumen wird das Luft-Kraftstoff-Gemisch angefettet. Es ist vorgesehen, dass in vorteilhafter Weise unter Berücksichtigung der Umschaltung mindestens eine zusätzliche Teileinspritzung TEₙ₊₁ erfolgt.

### d) Bauteileschutzevents:

Aus Bauteilschutzgründen wird das Luft-Kraftstoff-Gemisch ebenfalls angefettet. Diese Anfettung führt ähnlich wie beim Kat-Ausräumen in vorteilhafter Weise unter Berücksichtigung der Umschaltung zu mindestens einer zusätzlichen Teileinspritzung TEₙ₊₁.

### Momenten-Reserve:

Schließlich ist als weiteres Ausführungsbeispiel vorgesehen, dass - auch wenn sich das Luft-Kraftstoff-Gemisch stabil auf einen Lambda-Wert eingependelt hat, die Brennkraftmaschine aber in der Momenten-Reserve, wie etwa dem Leerlauf, dem Kat-Heizen, der Partikelfilterregeneration sowie dem Kühlmittelheizen, betrieben wird, die massenbasierte Fahrweise beziehungsweise deren Umschaltung in vorteilhafter Weise abhängig von der Wirkungsgradverschlechterung des Motors genutzt wird, indem eine Umschaltung auf mindestens eine zusätzliche Teileinspritzung TEₙ₊₁ erfolgt.

Die vorliegende Erfindung betrifft insgesamt auch ein Computerprogramm, welches zur Durchführung des obigen Verfahrens geeignet ist, wenn es auf einem Computer ausgeführt wird. Dabei ist besonders bevorzugt, wenn das Computerprogramm auf einem Speicher abgespeichert ist. Die vorliegende Erfindung betrifft auch das genannte Steuer- und/oder Regelgerät zum Betreiben einer Brennkraftmaschine, insbesondere eines Kraftfahrzeugs, bei der der Kraftstoff direkt in einen Brennraum der Brennkraftmaschine eingespritzt wird. Um den Betrieb der Brennkraftmaschine im Hinblick auf den Kraftstoffverbrauch und das Emissionsverhalten zu optimieren, wird erfindungsgemäß vorgeschlagen, dass das Steuer- und/oder Regelgerät zur Steuerung und/oder Regelung des obigen Verfahrens geeignet sind und eingesetzt werden. Dabei ist besonders bevorzugt, wenn die Steuer- und/oder Regelgeräte mit je einem Computerprogramm der oben genannten Art versehen sind. Die Erfindung betrifft schließlich eine Brennkraftmaschine mit mindestens einem Brennraum und einer Einrichtung, welche den Kraftstoff direkt in den Brennraum einspritzt. Um das Betriebsverhalten dieser Brennkraftmaschine zu verbessern, insbesondere den Kraftstoffverbrauch, das Emissionsverhalten sowie das Kaltstartverhalten, ist erfindungsgemäß vorgesehen, dass die Brennkraftmaschine mit dem Steuer- und/oder Regelgerät ausgerüstet ist.

### Bezugszeichenliste

- KW: Kurbelwelle
- °KW: Grad Kurbelwinkel
- ZOT: Zylinderkolben oberer Totpunkt bei Zündung
- DRZ: Drehzahl
- n: Anzahl der Teileinspritzungen oder n-te Einspritzung
- n-1: anzahlreduzierende Umschaltung
- n+1: anzahlerhöhende Umschaltung
- TEₙ: Teileinspritzungen
- TEₙ₋ₘₐₓ: Anzahl der maximal möglichen Teileinspritzungen TEₙ
- TE_{n-Soll-BP}: Solleinspritzanzahl (betriebspunktabhängig)
- TE_{n-Soll-MB}: Solleinspritzanzahl (massenbasiert)
- K_{BPkalt}: Kennfeld betriebspunktabhängig im kalten Betrieb
- K_{MBkalt}: Kennfeld massenbasiert im kalten Betrieb
- K_{BPwarm}: Kennfeld betriebspunktabhängig im warmen Betrieb
- K_{MBvarm}: Kennfeld massenbasiert im warmen Betrieb
- KL_{Hub}: Kennlinie Ansaugventil
- KL_{Kolben}: Kennlinie Kolben
- KL_{Liner}: Kennlinie Benetzung Zylinderinnenwand
- KL_{Zylk}: Kennlinie Benetzung Zylinderkolben
- ΔP: Pausenzeit
- tₘᵢₙ: minimale Öffnungszeit
- tₒₑ: Öffnungszeit
- tₐₛ: Zeit am Hubanschlag
- tₛ: Schließzeit
- m: Kraftstoffmasse
- m_{Ges}: Gesamteinspritzmasse (massenbasiert)
- m_{BP}: Gesamteinspritzmasse (betriebspunktabhängig)
- mₖᵣᵢₜ: kritischer Massenschwellenwert
- ?mₖᵣᵢₜ: Unterschreitung des kritischen Massenschwellenwertes?
- m_{Offset}: Betrag einer Einspritzmasse als Offset des kritischen Massenschwellenwertes
- mₖᵣᵢₜ+m_{Offset}: Massenschwellenwert
- P1: Pfeil, kritischer Bereich
- λ: Lambda
- A: Linie A
- B: Linie B
- L1: Figurentext
- L2: Figurentext
- L3: Figurentext
- L4: Figurentext

## Patentansprüche

1. Verfahren zum Betreiben einer Brennkraftmaschine eines Kraftfahrzeugs, bei dem Kraftstoff in einer Einrichtung zur Kraftstoffeinspritzung in einer Mehrzahl (n) von zeitlich voneinander beabstandeten Teileinspritzungen (TEₙ) pro Arbeitszyklus direkt in einen Brennraum der Brennkraftmaschine eingespritzt wird, mit den Schritten:
Bestimmen der Gesamteinspritzmasse (m_{Ges}) pro Arbeitszyklus in den Brennraum in Abhängigkeit einer Leistungsanforderung an die Brennkraftmaschine in Abhängigkeit einer in den Brennraum zugeführten Luftmasse und
Herstellen eines Kraftstoff/Luft-Gemischs unter Berücksichtigung eines vorgegebenen Luft-Kraftstoff-Verhältnisses,
ferner umfassend die Schritte:
Ermitteln einer maximal möglichen Anzahl (n) von Teileinspritzungen (TEₙ₋ₘₐₓ) je Arbeitszyklus in Abhängigkeit eines kritischen Massenschwellenwertes (mₖᵣᵢₜ) eines dem jeweiligen Brennraum zugeordneten Kraftstoff-Einspritzventils, bei dem die Kraftstoffmasse je Teileinspritzung (TEₙ) nicht unterschritten wird, und der gewünschten einzuspritzenden bestimmten Gesamteinspritzmasse(m_{Ges}) pro Arbeitszyklus,
Festlegen einer massenbasierten Solleinspritzanzahl (TE_{n-Soll-MB}) in Abhängigkeit der ermittelten maximal möglichen Anzahl (n) von Teileinspritzungen (TEₙ₋ₘₐₓ) und Aufteilung der Gesamteinspritzmasse(m_{Ges}) auf die festgelegte massenbasierte Solleinspritzanzahl (TE_{n-Soll-MB}), und
Einspritzen der Gesamteinspritzmasse(m_{Ges}) pro Arbeitszyklus gemäß der festgelegten massenbasierten Solleinspritzanzahl (TE_{n-Soll-MB}) mit der auf die Teileinspritzungen (TEₙ) aufgeteilten Kraftstoffmassen (m),
wobei eine Umschaltung der zuvor ermittelten massenbasierten Solleinspritzanzahl (TE_{n-Soll-MB}) auf eine geringere maximal mögliche ermittelte massenbasierte Solleinspritzanzahl (TE_{n-Soll-MB}) aufgrund einer möglichen Unterschreitung des kritischen Massenschwellenwertes (mₖᵣᵢₜ), der raildruckabhängig bei einer minimalen möglichen Öffnungszeit (tₘᵢₙ) des Kraftstoff-Einspritzventils definiert ist, vorgenommen und eine Aufteilung der Gesamteinspritzmasse(m_{Ges}) auf die ermittelte maximal mögliche geringere Anzahl (n-1) von Teileinspritzungen (TEₙ₋ₘₐₓ) festgelegt wird,
wobei stets eine Umschaltung der zuvor ermittelten massenbasierten Solleinspritzanzahl (TE_{n-Soll-MB}) auf eine maximal mögliche ermittelte massenbasierte Solleinspritzanzahl (TE_{n-Soll-MB}) unter Berücksichtigung der möglichen Unterschreitung des kritischen Massenschwellenwertes (mₖᵣᵢₜ), der raildruckabhängig bei einer minimalen möglichen Öffnungszeit (tₘᵢₙ) des Kraftstoff-Einspritzventils erreicht wird, vorgenommen und eine Aufteilung der Gesamteinspritzmasse (m_{Ges}) auf die ermittelte maximal mögliche Anzahl (n+1) von Teileinspritzungen (TEₙ₋ₘₐₓ) festgelegt wird.

2. Verfahren nach Anspruch 1, **dadurch gekennzeichnet, dass** in einem Arbeitszyklus innerhalb der Ansaug- und Kompressionsphase massenbasiert mehrere Teileinspritzungen (TEₙ) abgesetzt werden, wobei zu verschiedenen Einspritz-Zeitpunkten mehrere Teileinspritzungen (TEₙ), insbesondere bis zu zehn Teileinspritzungen (TEₙ₌₁₀), insbesondere in zwei Einspritzpakten auf die Ansaug- und Kompressionsphase verteilt werden.

3. Verfahren nach Anspruch 1, **dadurch gekennzeichnet, dass** die Umschaltung auf eine ermittelte geringere Anzahl (n) von Teileinspritzungen (TE_{n-Soll-MB}) vorgenommen wird, bevor der kritische Massenschwellenwert (mₖᵣᵢₜ) mindestens einer der Teileinspritzungen (TEₙ) unterschritten wird, bei dem die Aufteilung der Gesamteinspritzmasse (m_{Ges}) innerhalb der ermittelten möglichen Anzahl (n) von Teileinspritzungen (TEₙ) möglich ist.

4. Verfahren nach Anspruch 1, **dadurch gekennzeichnet, dass** die Umschaltung auf eine ermittelte maximal mögliche Anzahl (n) von Teileinspritzungen (TEₙ₋ₘₐₓ) vorgenommen wird, wenn ein Massenschwellenwert (mₖᵣᵢₜ+m_{Offset}) erreicht wird, bei dem die Aufteilung der Gesamteinspritzmasse (m_{Ges}) innerhalb der ermittelten maximal möglichen Anzahl (n) von Teileinspritzungen (TEₙ₋ₘₐₓ) möglich ist.

5. Verfahren nach den Ansprüchen 3 und 4, **dadurch gekennzeichnet, dass** zwischen dem kritischen Massenschwellenwert (mₖᵣᵢₜ) und dem Massenschwellenwert (mₖᵣᵢₜ+m_{Offset}) in einer Hysterese hin- und hergeschaltet wird.

6. Verfahren nach Anspruch 1, **dadurch gekennzeichnet, dass** die Umschaltung der zuvor ermittelten massenbasierten Solleinspritzanzahl (TE_{n-Soll-MB}), ausgehend von einem stöchiometrischen Betrieb (λ=1) der Brennkraftmaschine, in bestimmten Betriebszuständen, wie einem a) Kaltstart (Startadaption) und/oder einer b) Kat-Diagnose (Parallelisierung) und/oder einem c) Kat-Ausräumen und/oder einem d) Bauteileschutzevent vorgenommen wird, wobei vom stöchiometrischen Betrieb (λ=1) abgewichen wird, sodass eine Änderung der durchgesetzten Gesamtkraftstoffmasse (m_{Ges}) pro Arbeitszyklus und bei Bedarf der ermittelten massenbasierten Solleinspritzanzahl (TE_{n-Soll-MB}) bewirkt wird.

7. Verfahren nach Anspruch 1, **dadurch gekennzeichnet, dass** die Umschaltung der zuvor ermittelten massenbasierten Solleinspritzanzahl (TE_{n-Soll-MB}) vorgenommen wird, wenn sich das Luft-Kraftstoff-Gemisch stabil auf einen stöchiometrischen Wert eingependelt hat, und die Brennkraftmaschine in der Momenten-Reserve, wie etwa dem Leerlauf, dem Kat-Heizen, der Partikelfilterregeneration sowie dem Kühlmittelheizen, betrieben wird, wobei in Abhängigkeit von einer Wirkungsgradverschlechterung der Brennkraftmaschine eine Umschaltung auf mindestens eine zusätzliche Teileinspritzung (TEₙ₊₁) erfolgt, sodass eine Erhöhung der ermittelten massenbasierten Solleinspritzanzahl (TE_{n-Soll-MB}) vorgenommen wird.

8. Computerprogramm, **dadurch gekennzeichnet, dass** es zur Durchführung des Verfahrens nach einem der Ansprüche 1 bis 7 konfiguriert ist, wenn es auf einem Computer ausgeführt wird, wobei es auf einem Speicher abgespeichert ist.

9. Steuer- und/oder Regelgerät zum Betreiben einer Brennkraftmaschine eines Kraftfahrzeugs, bei der der Kraftstoff direkt in einen Brennraum der Brennkraftmaschine eingespritzt wird, **dadurch gekennzeichnet, dass** es zur Steuerung und/oder Regelung des Verfahrens nach einem der Ansprüche 1 bis 7 konfiguriert ist, wobei das Steuer- und Regelgerät mit einem Computerprogramm nach Anspruch 8 versehen ist.

10. Brennkraftmaschine mit mindestens einem Brennraum und einer Einrichtung zur Kraftstoffeinspritzung, welche den Kraftstoff direkt in den Brennraum einspritzt, **dadurch gekennzeichnet, dass** sie mit einem Steuer- und/oder Regelgerät nach Anspruch 9 versehen ist.

## Claims

1. Method for operating an internal combustion engine of a motor vehicle, in which fuel in a fuel injection device is injected directly into a combustion chamber of the internal combustion engine in a plurality (n) of time-spaced partial injections (TEₙ) per duty cycle, the method comprising the following steps:
determining the total injection mass (m_{Ges}) per duty cycle into the combustion chamber as a function of an output requirement for the internal combustion engine as a function of an air mass supplied into the combustion chamber; and
producing a fuel/air mixture, taking into account a predetermined air-fuel ratio,
further comprising the following steps:
identifying a maximum possible number (n) of partial injections (TEₙ₋ₘₐₓ) per duty cycle as a function of a critical mass threshold (mₖᵣᵢₜ) of a fuel injector assigned to the particular combustion chamber, in which the fuel mass per partial injection (TEₙ) is not undercut, and of the desired determined total injection mass (m_{Ges}) per duty cycle to be injected,
determining a mass-based target injection number (TE_{n-Soll-MB}) as a function of the identified maximum possible number (n) of partial injections (TEₙ₋ₘₐₓ) and distribution of the total injection mass (m_{Ges}) to the determined mass-based target injection number (TE_{n-Soll-MB}), and
injecting the total injection mass (m_{Ges}) per duty cycle according to the determined mass-based target injection number (TE_{n-Soll-MB}) with the fuel masses (m) distributed to the partial injections (TEₙ),
wherein the previously identified mass-based target injection number (TE_{n-Soll-MB}) is switched to a lower maximum possible identified mass-based target injection number (TE_{n-Soll-MB}) due to a possible undercutting of the critical mass threshold (mₖᵣᵢₜ), which is defined dependent on rail pressure at a minimum possible opening time (tₘᵢₙ) of the fuel injector, and a distribution of the total injection mass (m_{Ges}) to the identified maximum possible lower number (n-1) of partial injections (TEₙ₋ₘₐₓ) is determined,
wherein the previously identified mass-based target injection number (TE_{n-Soll-MB}) is always switched to a maximum possible identified mass-based target injection number (TE_{n-Soll-MB}) taking into account the possible undercutting of the critical mass threshold (mₖᵣᵢₜ), which is reached dependent on rail pressure at a minimum possible opening time (tₘᵢₙ) of the fuel injector, and a distribution of the total injection mass (m_{Ges}) to the identified maximum possible number (n+1) of partial injections (TEₙ₋ₘₐₓ) is determined.

2. Method according to claim 1, **characterized in that** in a duty cycle within the intake and compression phase, a plurality of partial injections (TEₙ) are delivered on a mass basis, wherein at different injection times, a plurality of partial injections (TEₙ), in particular up to ten partial injections (TEₙ₌₁₀), are distributed in particular in two injection bundles to the intake and compression phase.

3. Method according to claim 1, **characterized in that** an identified lower number (n) of partial injections (TE_{n-Soll-MB}) is switched to before the critical mass threshold (mₖᵣᵢₜ) of at least one of the partial injections (TEₙ) is undercut in which the distribution of the total injection mass (m_{Ges}) within the determined possible number (n) of partial injections (TEₙ) is possible.

4. Method according to claim 1, **characterized in that** an identified maximum possible number (n) of partial injections (TEₙ₋ₘₐₓ) is switched to when a mass threshold (mₖᵣᵢₜ+m_{Offset}) is reached in which the distribution of the total injection mass (m_{Ges}) within the determined maximum possible number (n) of partial injections (TEₙ₋ₘₐₓ) is possible.

5. Method according to claims 3 and 4, **characterized in that** a switching back and forth in a hysteresis takes place between the critical mass threshold (mₖᵣᵢₜ) and the mass threshold (mₖᵣᵢₜ+m_{Offset}).

6. Method according to claim 1, **characterized in that** the previously identified mass-based target injection number (TE_{n-Soll-MB}) is switched, starting from a stoichiometric operation (λ=1) of the internal combustion engine, in certain operating states such as an a) cold start (start adaptation) and/or a b) catalytic converter diagnosis (parallelization) and/or a c) catalytic converter purging and/or a d) component protection event, wherein the stoichiometric operation (λ=1) is deviated from so that a change in the total fuel mass (m_{Ges}) put through per duty cycle and, if required, in the identified mass-based target injection number (TE_{n-Soll-MB}) is achieved.

7. Method according to claim 1, **characterized in that** the previously identified mass-based target injection number (TE_{n-Soll-MB}) is switched when the air-fuel mixture has stabilized to a stoichiometric value, and the internal combustion engine is operated in the torque reserve, such as idling, catalytic converter heating, particulate filter regeneration, and coolant heating, wherein, depending on a deterioration in the efficiency of the internal combustion engine, at least one additional partial injection (TEₙ₊₁) is switched to, so that the identified mass-based target injection number (TE_{n-Soll-MB}) is increased.

8. Computer program, **characterized in that** it is configured to carry out the method according to any of claims 1 to 7 when executed on a computer, wherein the computer program is stored in a memory.

9. Control and/or regulation apparatus for operating an internal combustion engine of a motor vehicle, in which the fuel is injected directly into a combustion chamber of the internal combustion engine, **characterized in that** the apparatus is configured to control and/or regulate the method according to any of claims 1 to 7, wherein the control and regulation apparatus is provided with a computer program according to claim 8.

10. Internal combustion engine comprising at least one combustion chamber and a fuel injection device which injects the fuel directly into the combustion chamber, **characterized in that** the internal combustion engine is provided with a control and/or regulation apparatus according to claim 9.

## Revendications

1. Procédé de fonctionnement d'un moteur à combustion interne d'un véhicule automobile, dans lequel du carburant est injecté directement dans une chambre de combustion du moteur à combustion interne dans un dispositif d'injection de carburant en une pluralité (n) d'injections partielles (TEₙ) espacées les unes des autres dans le temps par cycle de travail, comportant les étapes de :
détermination de la masse totale injectée (m_{Ges}) par cycle de travail dans la chambre de combustion en fonction d'une demande de puissance au moteur à combustion interne en fonction d'une masse d'air amenée dans la chambre de combustion et
production d'un mélange air/carburant en respectant un rapport air/carburant prédéfini,
comprenant en outre les étapes de :
évaluation d'un nombre maximal possible (n) d'injections partielles (TE_{n- max}) par cycle de travail en fonction d'une valeur seuil de masse critique (mₖᵣᵢₜ) d'un injecteur de carburant associé à la chambre de combustion respective, pour lequel la masse de carburant par injection partielle (TEₙ) n'est pas dépassée vers le bas, et de la masse totale d'injection déterminée souhaitée (m_{Ges}) à injecter par cycle de travail,
établissement d'un nombre d'injections de consigne basé sur la masse (TE_{n-Soll-MB}) en fonction du nombre maximal possible (n) évalué d'injections partielles (TEₙ₋ₘₐₓ) et répartition de la masse d'injection totale (m_{Ges}) sur le nombre d'injections de consigne basé sur la masse (TE_{n-Soll-MB}) établi, et
injection de la masse d'injection totale (m_{Ges}) par cycle de travail conformément au nombre d'injections de consigne basé sur la masse (TE_{n-Soll-MB}) établi avec les masses de carburant (m) réparties entre les injections partielles (TEₙ),
dans lequel une commutation du nombre d'injections de consigne basé sur la masse (TE_{n-Soll-MB}) évalué auparavant sur un nombre d'injections de consigne basé sur la masse (TE_{n-Soll-MB}) évalué plus faible possible en raison d'un éventuel dépassement vers le bas de la valeur seuil de masse critique (mₖᵣᵢₜ), qui est défini en fonction de la pression du rail pour un temps d'ouverture possible minimal (tₘᵢₙ) de l'injecteur de carburant, est entreprise et une répartition de la masse d'injection totale (m_{Ges}) est établie sur le nombre plus faible possible (n-1) évalué d'injections partielles (TEₙ₋ₘₐₓ),
dans lequel une commutation du nombre d'injections de consigne basé sur la masse (TE_{n-Soll-MB}) évalué auparavant sur un nombre d'injections de consigne basé sur la masse (TE_{n-Soll-MB}) évalué maximal possible est toujours effectuée en tenant compte du dépassement possible vers le bas de la valeur seuil de masse critique (mₖᵣᵢₜ), qui est atteint en fonction de la pression du rail pour un temps d'ouverture possible minimal (tₘᵢₙ) de l'injecteur de carburant, et une répartition de la masse d'injection totale (m_{Ges}) est établie sur le nombre maximal possible (n+1) évalué d'injections partielles (TEₙ₋ₘₐₓ).

2. Procédé selon la revendication 1, **caractérisé en ce que** dans un cycle de travail, à l'intérieur de la phase d'aspiration et de compression, plusieurs injections partielles (TEₙ) sont réalisées sur la base de la masse, dans lequel plusieurs injections partielles (TEₙ), en particulier jusqu'à dix injections partielles (TEₙ₌₁₀), sont réparties à différents instants d'injection, en particulier dans deux paquets d'injection, sur la phase d'aspiration et de compression.

3. Procédé selon la revendication 1, **caractérisé en ce que** la commutation sur un nombre (n) plus faible évalué d'injections partielles (TE_{n-Soll-MB}) est effectuée avant de passer en dessous du seuil de masse critique (mₖᵣᵢₜ) d'au moins une des injections partielles (TEₙ), pour lequel la répartition de la masse totale injectée (m_{Ges}) est possible à l'intérieur du nombre (n) possible évalué d'injections partielles (TEₙ).

4. Procédé selon la revendication 1, **caractérisé en ce que** la commutation sur un nombre maximal possible (n) évalué d'injections partielles (TEₙ₋ₘₐₓ) est effectuée lorsqu'une valeur seuil de masse (mₖᵣᵢₜ+m_{Offset}) est atteinte, à laquelle la répartition de la masse d'injection totale (m_{Ges}) est possible à l'intérieur du nombre maximal possible (n) évalué d'injections partielles (TEₙ₋ₘₐₓ).

5. Procédé selon les revendications 3 et 4, **caractérisé en ce que** l'on commute en va-et-vient entre la valeur seuil de masse critique (mₖᵣᵢₜ) et la valeur seuil de masse (mₖᵣᵢₜ+m_{Offset}) selon une hystérésis.

6. Procédé selon la revendication 1, **caractérisé en ce que** la commutation du nombre d'injections de consigne basé sur la masse (TE_{n-Soll-MB}) évalué auparavant, en partant d'un fonctionnement stœchiométrique (λ=1) du moteur à combustion interne, est effectuée dans des états de fonctionnement déterminés, comme un a) démarrage à froid (adaptation au démarrage) et/ou un b) diagnostic du catalyseur (parallélisation) et/ou un c) débourrage du catalyseur et/ou un d) événement de protection des composants, dans lequel on s'écarte du fonctionnement stœchiométrique (λ=1), de sorte qu'une modification de la masse totale de carburant (m_{Ges}) transmise est entraînée par cycle de travail et, en cas de besoin, du nombre d'injections de consigne basé sur la masse (TE_{n-Soll-MB}) évalué.

7. Procédé selon la revendication 1, **caractérisé en ce que** la commutation du nombre d'injections de consigne basé sur la masse (TE_{n-Soll-MB}) évalué auparavant est effectuée lorsque le mélange air-carburant s'est stabilisé à une valeur stœchiométrique et que le moteur à combustion interne est en réserve de couple, comme par exemple le ralenti, le chauffage du catalyseur, la régénération du filtre à particules ainsi que le chauffage du liquide de refroidissement, dans lequel une commutation sur au moins une injection partielle supplémentaire (TEₙ₊₁) est effectuée en fonction d'une détérioration du rendement du moteur à combustion interne, de sorte qu'une augmentation du nombre d'injections de consigne basé sur la masse (TE_{n-Soll-MB}) évalué est effectuée.

8. Programme d'ordinateur, **caractérisé en ce qu'**il est configuré pour mettre en œuvre le procédé selon l'une des revendications 1 à 7 lorsqu'il est exécuté sur un ordinateur, dans lequel il est stocké dans une mémoire.

9. Appareil de commande et/ou de régulation pour faire fonctionner un moteur à combustion interne d'un véhicule automobile, dans lequel le carburant est injecté directement dans une chambre de combustion du moteur à combustion interne, **caractérisé en ce qu'**il est configuré pour commander et/ou réguler le procédé selon l'une des revendications 1 à 7, dans lequel l'appareil de commande et de régulation est pourvu d'un programme d'ordinateur selon la revendication 8.

10. Moteur à combustion interne comportant au moins une chambre de combustion et un dispositif d'injection de carburant qui injecte le carburant directement dans la chambre de combustion, **caractérisé en ce qu'**il est muni d'un appareil de commande et/ou de régulation selon la revendication 9.
